(19) **Europäisches Patentamt / European Patent Office / Office européen des brevets**

(11) **EP 1 611 670 B1**

(12) **EUROPÄISCHE PATENTSCHRIFT**

(45) Veröffentlichungstag und Bekanntmachung des Hinweises auf die Patenterteilung:
**07.03.2007 Patentblatt 2007/10**

(21) Anmeldenummer: **04703176.0**

(22) Anmeldetag: **19.01.2004**

(51) Int Cl.:
**H02P 6/18** *(2006.01)*

(86) Internationale Anmeldenummer:
**PCT/EP2004/000353**

(87) Internationale Veröffentlichungsnummer:
**WO 2004/091088 (21.10.2004 Gazette 2004/43)**

(54) **SCHALTUNGSANORDNUNG UND VERFAHREN ZUR ANSTEUERUNG EINES BÜRSTENLOSEN PERMANENTERREGTEN GLEICHSTROMMOTORS**

CIRCUIT ARRANGEMENT AND METHOD FOR CONTROLLING A BRUSHLESS, PERMANENTLY EXCITED DIRECT CURRENT MOTOR

ENSEMBLE CIRCUIT ET PROCEDE D'EXCITATION D'UN MOTEUR A COURANT CONTINU A AIMANTS PERMANENTS SANS BALAIS

(84) Benannte Vertragsstaaten:
**DE FR GB IT**

(30) Priorität: **10.04.2003 DE 10316539**

(43) Veröffentlichungstag der Anmeldung:
**04.01.2006 Patentblatt 2006/01**

(73) Patentinhaber: **SIEMENS AKTIENGESELLSCHAFT**
**80333 München (DE)**

(72) Erfinder:
• **DE FILIPPIS, Pietro**
**I-20124 Milano (IT)**
• **LOHSE, Karsten**
**97070 Würzburg (DE)**
• **SCHWARZKOPF, Johannes**
**97828 Marktheidenfeld (DE)**
• **WÜNSCH, Eberhard**
**97295 Waldbrunn (DE)**

(56) Entgegenhaltungen:
**EP-A- 0 070 341**

• **PATENT ABSTRACTS OF JAPAN vol. 1997, no. 03, 31. März 1997 (1997-03-31) & JP 08 317685 A (MATSUSHITA ELECTRIC IND CO LTD), 29. November 1996 (1996-11-29)**

## Beschreibung

Die Erfindung betrifft eine elektronische Schaltungsanordnung und ein Verfahren zum selbstkommutierenden Ansteuern eines bürstenlosen permanenterregten Gleichstrom-Elektromotors wobei die Rotorposition ohne zusätzliche Sensoren bestimmt wird.

Wenn ein elektronisch kommutierter Elektromotor als selbstkommutierte Maschine betrieben werden soll, ist es erforderlich die momentane Rotor-Drehlage zu erfassen. Dazu können separate Sensoren wie z.B. Encoder, Resolver oder Hall-ICs verwendet werden. Aber auch eine sensorlose Rotorlageerfassung durch Auswertung der in den Motorphasen induzierten Spannungen kann hier zum Einsatz kommen.

In der US Patentschrift 5 469 033 A wird ein Verfahren beschrieben, durch das die Anordnung mehrerer Hall-Sensoren in einem bürstenlosen elektrischen Gleichstrom-Motor durch eine elektronische Schaltungsanordnung ersetzt wird. Diese Schaltungsanordnung generiert mit Hilfe einer Logik-Einheit Signale, welche die Hall-Sensorsignale funktionell ersetzen. Vor allem bei kleineren Antrieben sind der exakten Positionierung der Hall-Sensoren allerdings Grenzen gesetzt. Der mechanische Aufwand nimmt erheblich zu. Um die Streubreite der Positionierung gering zu halten und um einen guten Wirkungsgrad und/oder ein hohes Motormoment zu erhalten, bleibt oftmals nur noch die Möglichkeit die Sensoren im Fertigungsprozess aufwendig zu justieren. Dies hat zur Folge, dass besonders bei sehr kleinen Motoren, an die trotzdem sehr hohe Anforderungen gestellt werden, die Kosten erheblich steigen. Hier ist die sensorlose Rotorlageerfassung trotz des höheren elektronischen Aufwandes eine wirtschaftliche Alternative. Auch bei Motoren, bei denen der Rotor gekapselt ist, und dadurch ein zusätzlicher mechanischer Aufwand für die Gehäuse-Durchführung der Hall-Sensorsignale erforderlich wird, kann eine sensorlose Erfassung der Rotor-Drehlage über die Auswertung der in den Motorphasen induzierten Spannungen vorteilhaft zum Einsatz kommen. Besonders bei Motoren kleinerer Leistung, bei denen keine hohen Anforderungen an die Dynamik gestellt werden und bei Motoren, die innerhalb eines begrenzten Drehzahlbandes arbeiten sollen, hat sich eine sensorlose Rotorlageerfassung etabliert. Dies sind z.B. Festplattenmotoren, Pumpenantriebe, Lüfter und Gebläsemotoren. Die Grundlage dieses Verfahrens basiert auf dem Erfassen und Auswerten der in den Phasen induzierten elektrischen Signale, die auch als Gegen-EMK-Signale oder Back-EMF-Signale bekannt sind und im Folgenden einfach als Induktionssignale bezeichnet werden.

Die europäische Patentanmeldung EP 0 840 439 A1 offenbart einen Verstärker und ein Verfahren zum Ermitteln eines Induktionssignals (Back-EMF-Signal) einer Phase eines GleichstromMotors zur Bestimmung der Drehlage des Rotors. Dazu wird das Induktionssignal mit Hilfe einer Komparator-Schaltung mit einem Referenzsignal verglichen und bei Überschreiten des Referenzsignals der Status des Ausgangssignals gewechselt. Um bauteilspezifische Unsicherheiten durch Ansprech-Hysterese zu beseitigen wird sowohl dem Induktionssignal als auch dem Referenzsignal eine Vorspannung (Spannungs-Offset) überlagert, wobei die Vorspannung auf das Referenzsignal in Abhängigkeit von einem Steuersignal erst bei Annäherung des Induktionssignals an einen Null-Durchgang aufgeschaltet wird.

Bei den bekannten Verfahren wird bei der Auswertung des Induktionssignals zur Ermittlung der Rotor-Drehlage von einem idealen Verlauf des Induktionssignals ausgegangen, was jedoch nicht einem tatsächlich zu messenden Induktionssignal einer Motorphase im Betrieb entspricht. In Wirklichkeit ist dieses Signal von Störungen und Schwingungen überlagert, die zum Beispiel durch die Ansteuerelektronik verursacht werden. Dies trifft besonders zu, wenn der Motor pulsweitenmoduliert betrieben und mit Leistungshalbleitern kommutierend beschaltet ist. Das Signal ist also mit Störungen einer unbekannten Frequenz- und Amplitudenbandbreite überlagert, die eine genaue Bestimmung des Induktionssignalverlaufes und somit der relativen Rotor-Drehlage erschwert. Dies wiederum hat, besonders bei höheren Drehzahlen erhebliche Leistungseinbußen im Betrieb und Einschränkungen bei der Steuerung/Regelung von Drehzahl und Drehmoment zur Folge.

Auch die Patentanmeldung JP08317685 offenbart einen bürstenlosen DC.Motor bei dem die Lagebestimmung des Rotors anhand des Anschlußspannung des Motors ermittelt wird.

Der Erfindung liegt die Aufgabe zugrunde, die momentane relativen Drehlage des Rotors eines bürstenlosen Gleichstrommotors genauer zu bestimmen und somit eine differenzierte Ansteuerung von Stellgrößen zu ermöglichen, die Leistung und Wirkungsgrad im selbstkommutierenden Betrieb des Motors maßgeblich bestimmen.

Gelöst wird diese Aufgabe erfindungsgemäß mit einer Schaltungsanordnung gemäß Anspruch 1 und einem Verfahren mit den Merkmalen gemäß Anspruch 8.

Die erfindungsgemäße Schaltungsanordnung ist unabhängig von der Anzahl und der Verschaltung der Motorphasen, in Stern-, Delta- oder Polygonform, einsetzbar. Prinzipiell ergibt sich bei jeder dieser Phasen-Verschaltungen ein freier, äußerer Phasenanschluss pro Phase, der über Leistungs-Schaltelemente wahlweise auf das höhere oder das niedrigere Potenzial einer Versorgungs-Gleichspannungsquelle geschaltet oder auch von beiden Potenzialen getrennt und somit quasi potenzialfrei geschaltet werden kann.

Die Leistungssteuereinheit zum Schalten der oben genannten drei Schaltzustände für die einzelnen Motorphasen ist aus Leistungs-Schaltelementen aufgebaut. Dabei sind pro Phase zumindest zwei dieser Leistungs-Schaltelemente in Halbbrückenschaltung vorgesehen. Diese Leistungs-Schaltelemente werden von der Steuereinheit so angesteuert, dass jede Motorphase kommutierend, das heißt, in zyklischer Reihenfolge und zeitlich versetzt zu den übrigen Motorphasen, für jeweils eine Zeitdauer, wechselnd zunächst mit dem höheren Potenzial (Schaltzustand 1), dann potenzialfrei (Schaltzustand 2) und darauffolgend mit dem niedrigeren Potenzial (Schaltzustand 3) der Gleichspannungsquelle beschaltet wird. Dieser Ablauf der Schaltzustände wird als Kommutierungszyklus einer Phase bezeichnet, der sich fortlaufend wiederholt. Dadurch wird, je nach Konstruktionsprinzip des Motors, im Stator oder im Rotor ein umlaufendes Magnetfeld erzeugt, welchem der permanenterregte Rotor bzw. Stator im Gleichlauf folgt und sich dreht.

Die Zeitdauer eines Zyklusabschnittes oder Schaltzustandes im Kommutierungszyklus einer Phase, in dem die Phase mit einem Batteriepotenzial beaufschlagt ist, wird im Folgenden auch als Kommutierungszeitdauer oder Kommutierungswinkel bezeichnet.

Durch die Drehung des Rotors wird gleichzeitig ein elektrisches Induktionssignal in der Phase erzeugt, das idealisiert dargestellt im Wesentlichen einen sinusförmigen Verlauf aufweist. Der einmalige Durchlauf dieser Sinuskurve von 0° bis 360° kennzeichnet den elektrischen Zyklus einer Motor-Phase. Bei Gleichlauf des umlaufenden Magnetfeldes und des Rotors entspricht der komplette Kommutierungszyklus einer Phase dem elektrischen Zyklus und somit einem Winkel von 360°.

Bezogen auf den kompletten Kommutierungszyklus einer Phase kann der Kommutierungszeitdauer somit auch ein Winkelabschnitt, der als Kommutierungswinkel bezeichnet wird, zugeordnet werden.

Durch die Kommutierungszeitdauer, die das zeitliche Verhältnis des potenzialfreien Zyklusabschnittes zu den Zyklusabschnitten, in denen die Phase mit Batteriepotenzial beaufschlagt ist, bestimmt, sowie den Zeitpunkt des jeweiligen Umschaltens bezogen auf die Rotor-Drehlage, wird die Drehzahl und das Drehmoment des Motors beeinflusst.

Eine weitere Möglichkeit die Leistung des Motors zu beeinflussen besteht in der so genannten pulsweiten- oder pulsbreitenmodulierten Ansteuerung, die im Folgenden als PWM-Steuerung bezeichnet wird. PWM-Steuerung bedeutet, dass die nicht potenzialfreien Schaltzustände (Schaltzustand 1 und 3) nicht kontinuierlich während der kompletten Kommutierungszeitdauer aufrecht erhalten werden, sondern das jeweilige Batteriepotenzial in einem variierbaren Pulsweitenverhältnis zu- und abgeschaltet wird. Dieses Pulsweitenverhältnis definiert das zeitliche Verhältnis von Zu- und Abschaltdauer und bestimmt die mittlere Leistung und somit Drehzahl und Drehmoment des Motors mit.

Da der Zeitpunkt des jeweiligen Umschaltens von einem Schaltzustand in den Nächsten in Abhängigkeit von der Rotor-Drehlage bestimmt wird, ist es wichtig die aktuelle Rotor-Drehlage möglichst genau zu kennen. Für die Ermittlung der Rotor-Drehlage wird das durch die Rotordrehung in der Phase induzierte elektrische Induktionssignal herangezogen. Hierzu kommt jedoch nur der Bereich des elektrischen Kommutierungszyklus infrage, in dem die jeweilige Phase potenzialfrei geschaltet (Schaltzustand 2) ist, da hier keine Batterie-Spannungen oder -Ströme das Induktionssignal überlagern. Dieser Bereich wird mit größer werdendem Kommutierungswinkel kleiner und mit zunehmender Rotorgeschwindigkeit zeitlich kürzer. Um unter diesen Umständen den Verlauf des Induktionssignals mit der erforderlichen Genauigkeit auswerten zu können, kommt es darauf an, dass dieses Signal möglichst störungsfrei bereitgestellt werden kann.

Bedingt durch den Aufbau der Leistungs-Schaltelemente weisen diese jedoch parasitär wirkende elektrische Kapazitäten auf. Diese Kapazitäten wirken auf das Induktionssignal störend, indem sie die zu messende Phase belasten und dadurch Strom- und Spannungsschwankungen hervorrufen die dem Induktionssignal überlagert sind. Bedingt durch Umgebungseinflüsse und den Aufbau des Motors und der Steuerschaltung sind dem Induktionssignal naturgemäß ohnehin bereits meist hochfrequente Störungen überlagert. Ein derart verunreinigtes, mit Störungen überlagertes Induktionssignal lässt eine genaue Bestimmung der Rotor-Drehlage ohne zusätzlichen Signalgeber nicht zu.

Mit Hilfe der Erfindung gelingt es nun die genannten Störungen des Induktionssignals größtenteils zu kompensieren. Die Erfindung basiert auf der Erkenntnis, dass der durch die Phasenanordnung und die Leistungs-Schaltelemente gegebene Schaltungsaufbau, bezogen auf jeweils nur eine Phase, als Brückenschaltung gesehen werden kann, in der jeweils nur ein Glied fehlt.

Erfindungsgemäß kann dementsprechend nur eine Phase zur Messung des erforderlichen Induktionssignals herangezogen werden, die im Weiteren als Signal-Phase bezeichnet wird. Zwischen den Phasenanschluss der Signal-Phase und den Phasenanschluss einer im Kommutierungszyklus benachbarten Phase wird ein kapazitives Entstörbauteil, beispielsweise ein R/C-Glied, eingebracht, das die Brückenschaltung bezogen auf die Signal-Phase vervollständigt.

Die Brückenschaltung besteht somit aus:

- den beiden der Signal-Phase im Kommutierungszyklus benachbarten Phasen, die einen Schenkel der Brückenschaltung bilden,
- der parasitären Gesamtkapazität der Leistungs-Schaltelemente, die der Signal-Phase zugeordnet sind, und dem kapazitiven Entstörbauteil, die zusammen einen zweiten Schenkel der Brückenschaltung bilden und
- der Signal-Phase selbst, welche die Messbrücke bildet, an der das Induktionssignal gemessen werden soll.

Das kapazitive Entstörbauteils wird so dimensioniert, dass die genannte Brückenschaltung abgeglichen ist und dadurch die Störeinflüsse der Leistungs-Schaltelemente kompensiert werden. Somit ist am Phasenanschluss das um diese Störeinflüsse bereinigte Induktionssignal messbar.

Dieses Induktionssignal wird dann einer separaten AuswerteElektronik oder einer in der Hauptsteuereinheit integrierten Auswertelogik zugeführt, in der anhand des Signalverlaufes die aktuelle Drehlage des Rotors bestimmt wird.

Durch die Erfindung wird somit ein störungsresistenter Lauf und eine Steigerung des Wirkungsgrades speziell in Grenzbereichen, bei hoher Drehzahl, großen Kommutierungswinkeln und wechselndem Pulsweitenverhältnis ermöglicht. Dies hat positive Auswirkungen auf das Leistungsgewicht und die Baugröße des Motors sowie auf den Energieverbrauch im Betrieb. Erfinderische Weiterbildungen sind durch die Unteransprüche gekennzeichnet.

Ein Ausführungsbeispiel der Erfindung wird im Folgenden anhand von schematischen Zeichnungen näher erläutert. Es zeigen:

| | |
|---|---|
| Figur 1 | ein Blockschaltbild der Schaltungsanordnung zur Ansteuerung eines bürstenlosen Gleichstrommotors, |
| Figur 2 | einen Signalverlauf eines Phasensignals über einen elektrischen Zyklus einer Phase, |
| Figur 3 | eine Brückenschaltung aufgebaut aus drei Motorphasen, Leistungs-Schaltelementen und einem Entstörbauteil, |
| Figur 4 | eine Schaltungsanordnung einer Halbwellen-Differentialverstärker-Einheit mit Filterfunktion, |
| Figur 5 | ein Ausführungsbeispiel eines Gate-Generators, |
| Figur 6 | den Schaltungsaufbau eines Signalgebers zum Erzeugen eines Open-Window-Steuersignals, |
| Figur 7A | ein Ausführungsbeispiel eines Positionsdetektors mit Digitalfilterfunktion zum Erzeugen eines Positionssignals, |
| Figur 7B | Diagrammausschnitte mit Darstellung der zeitlichen Signalverläufe, die zum Erzeugen des Positionssignals herangezogen werden, |
| Figur 8 | einen Schwellwertgeber zur Erzeugung und Aktivierung eines Schwellwertsignals, |
| Figuren 9a bis 9d | idealisierte zeitliche Verläufe der Signale, die zur Bestimmung der Rotorposition herangezogen oder erzeugt werden, bei unterschiedlichen Rotor-Drehgeschwindigkeiten und |
| Figur 10 | eine prinzipielle Schaltungsanordnung zur Ansteuerung eines bürstenlosen Elektromotors, bei dem die Verarbeitung des Induktionssignals und die Generierung eines Positionssignals durch die Hauptsteuereinheit übernommen werden. |

Funktionsgleiche Elemente und Signale sind in den Figuren mit den selben Bezugszeichen bzw. Bezeichnungen versehen.

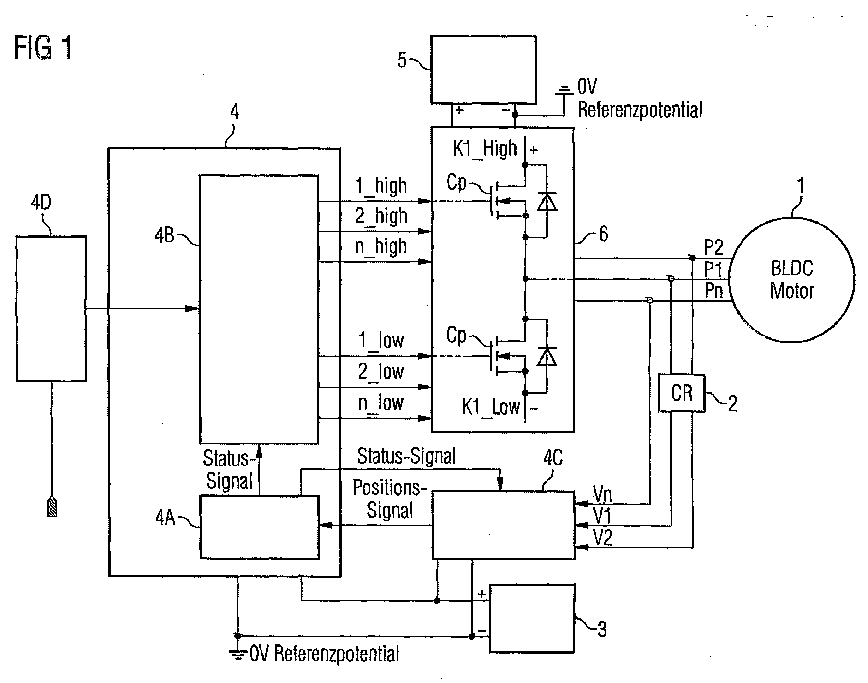

Ein Blockschaltbild mit dem prinzipiellen Aufbau einer Ansteuerungselektronik eines bürstenlosen Elektromotors zeigt Figur 1. Die im Wesentlichen dargestellten Einheiten sind ein Elektromotor 1, eine Leistungssteuereinheit 6, ein kapazitives Entstörbauteil 2 (CR), eine Signalaufbereitungseinheit 4C, eine Hauptsteuereinheit 4 mit Positionsverarbeitungsmodul 4A und Kommutierungsmodul 4B, ein Pulsweitengenerator 4D, eine Leistungs-Gleichspannungsquelle 5 und eine Steuer-Gleichspannungsquelle 3.

Der Elektromotor 1 ist als bürstenloser Gleichstrom-Motor dargestellt, der im Folgenden auch als BLDC-Motor bezeichnet wird und welcher drei Motor-Phasen aufweist. Die Leistungssteuereinheit 6 beinhaltet eine schematische Darstellung der Anordnung von Leistungs-Schaltelementen K1_High, K1_Low in Form einer Transistor-Halbbrückenschaltung zur Ansteuerung einer Motor-Phase P1 stellvertretend für die Leistungs-Schaltelemente an den weiteren Motor-Phasen P2 bis Pn, wobei die Phasenanzahl n des Elektromotors prinzipiell beliebig ist.

Die Motor-Phasen P1 bis Pn des Elektromotors 1 werden von der Leistungssteuereinheit 6 kommutierend mit den Potenzialen der Leistungs-Gleichspannungsquelle 5 beschaltet. Die Ansteuerung der Leistungs-Schaltelemente der Leistungssteuereinheit 6 erfolgt durch das Kommutierungsmodul 4B der Hauptsteuereinheit 4. Zusätzlich sind an die Motor-Phasen P1 bis Pn des Elektromotors 1 Signalleitungen V1 bis Vn angeschlossen, über welche die Phasensignale der Motor-Phasen P1 bis Pn der Signalverarbeitungseinheit 4C zugeführt werden.

Die Signalaufbereitungseinheit 4C dient zum Erzeugen des Positionssignals, welches in die Hauptsteuereinheit 4 eingespeist und dort in dem Positionsverarbeitungsmodul 4A weiterverarbeitet wird.

Zwischen der im Weiteren auch als Signal-Phase P1 bezeichneten Motor-Phase P1 und der benachbarten Motor-Phase P2 befindet sich das kapazitive Entstörbauteil 2 (CR), welches zur Kompensation von Störeinflüssen auf das Induktionssignal der Signal-Phase P1 dient.

Die Signalverarbeitungseinheit 4C sowie die Hauptsteuereinheit 4 werden über die so genannte Steuer-Gleichspannungsquelle 3 mit Strom versorgt. Alternativ kann die Steuer-Gleichspannungsquelle 3 auch durch das Auskoppeln einer Versorgungsspannung aus der Leistungs-Gleichspannungsquelle 5 ersetzt werden. Diese Versorgungsspannung kann mit Hilfe eines Spannungsreglers 7 oder eines Spannungswandlers 7 an das Niveau der Arbeitsspannung der Hauptsteuereinheit 4 und der Signalverarbeitungseinheit 4C angepasst werden.

In der Signalaufbereitungseinheit 4C wird in Abhängigkeit von Status-Signalen der Hauptsteuereinheit 4 aus dem Induktionssignal der Signal-Phase P1 ein Rotor-Positions-Signal erzeugt und dem Positionsverarbeitungsmodul 4A der Hauptsteuereinheit 4 zugeführt. Das Positionsverarbeitungsmodul 4A der Hauptsteuereinheit 4 erzeugt daraus Status-Signale, die dem entsprechenden Rotor-Positions-Abschnitt entsprechen. Diese Status-Signale werden zur Regelung der Motorleistung sowohl der Signalaufbereitungseinheit 4C als auch dem Kommutierungsmodul 4B zugeführt.

Das Kommutierungsmodul 4B gibt abhängig von den Status-Signalen und den Signalen des Pulsweitengenerators 4D die Steuersignale 1_hi bis n_low für die Leistungs-Schaltelemente aus. Diese Steuersignale werden dem PWM-Signal entsprechend moduliert, was zur Variation der effektiven Motorleistung dient.

In der Leistungssteuereinheit 6 werden die Steuersignale 1_hi bis n_low ggf. aufbereitet und die Leistungs-Schaltelemente damit angesteuert.

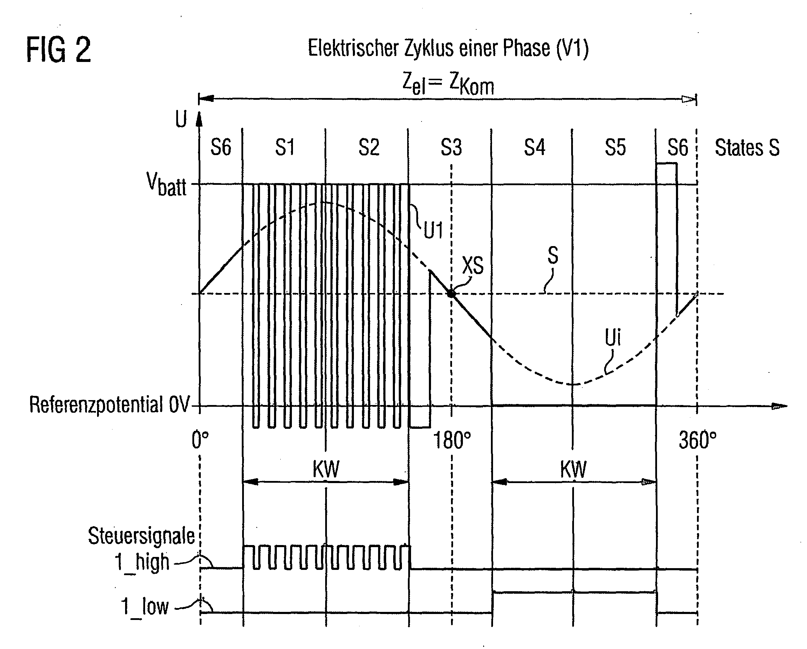

Figur 2 zeigt im oberen Phasen-Diagramm den idealisierten zeitlichen Verlauf eines Phasen-Signals U1 an der Signal-Phase P1 des Elektromotors bei pulsweitenmodulierter Ansteuerung. Dem Phasen-Signal hinterlegt ist der idealisiert dargestellte sinusförmige Verlauf des Induktionssignals Ui und die zugehörige Sinus-Achse S dargestellt. Der komplette elektrische Zyklus $Z_{el}$ ist in sechs einzelne gleichlange Abschnitte S1 bis S6, im Folgenden "States" genannt, von jeweils 60° unterteilt.

Darunter sind die zugehörigen Steuersignale 1_high und 1_low für die zugehörigen Leistungs-Schaltelemente der Signal-Phase dargestellt.

Durch die relative Drehung des Rotors zum Stator durchwandert die einer Phase zugehörige Phasen-Wicklung jeweils die Magnetfelder der korrespondierenden Magnetpole.

Bei potenzialfrei geschaltetem Phasenanschluss bildet sich an der jeweiligen Phase beim Durchwandern eines jeweiligen Magnetfeldes idealisiert dargestellt ein im Wesentlichen sinusförmiger Verlauf des Induktionssignals Ui um eine Sinus-Achse S aus. Das einmalige Durchlaufen dieser Sinuskurve von 0° bis 360° entspricht dem elektrischen Zyklus $Z_{el}$ der jeweiligen Phase. Je nach Anzahl der magnetischen Pole des Motors wird der elektrische Zyklus $Z_{e1}$ an einer Phase während einer Rotorumdrehung mehrfach durchlaufen.

Diesem sinusförmigen Verlauf des Induktionssignals Ui ist die kommutierende, pulsweitenmodulierte Beschaltung der Signal-Phase mit Batteriepotenzial $V_{batt}$ überlagert, was den Gleichlauf von Rotor und umlaufendem Magnetfeld voraussetzt. Bei Gleichlauf von Rotor und umlaufenden Magnetfeld entspricht der elektrische Zyklus $Z_{el}$ somit dem Kommutierungszyklus $Z_{Kom}$. Mit steigender Drehzahl des Rotors werden die elektrischen Zyklen einer Phase in kürzer werdenden Zeitabschnitten durchlaufen. Entsprechend muss auch der Kommutierungszyklus durch die Hauptsteuereinheit schneller wiederholt werden.

Um die daraus resultierenden Anforderungen an die Hauptsteuereinheit, zum Beispiel einen Mikrocontroller, zur Ansteuerung der einzelnen Motor-Phasen in vertretbarem Rahmen zu halten, wird der Kommutierungszyklus $Z_{Kom}$ in eine vorgegebene Anzahl, im Regelfall gleichgroßer, States unterteilt. Mindestens für die Dauer eines States wird die Beschaltung der einzelnen Motor-Phasen jeweils beibehalten. Zur einfachen Darstellung wurde der elektrische Zyklus in Figur 2 in sechs States S1 bis S6, zu je 60° unterteilt, es sind jedoch durchaus auch höhere oder niedrigere Teilungen möglich.

Der sinusförmige Verlauf des Induktionssignals Ui im elektrischen Zyklus $Z_{el}$ wird von den innerhalb bestimmter States (State S1 u. S2 sowie S4 u. S5) aufgeschalteten Spannungspotenzialen (0V/$V_{batt}$) einer Gleichspannungsquelle überlagert. Die Dauer, für die eine Phase auf jeweils ein Potenzial der Gleichspannungsquelle geschaltet ist, wird als Kommutierungswinkel KW bezeichnet. Wird, wie in Figur 2 gezeigt, jeweils für zwei aufeinanderfolgende States von 60° ein Potenzial der Gleichspannungsquelle auf eine Motor-Phase geschaltet, so ergibt sich ein Kommutierungswinkel KW von 120°.

Das für die Dauer eines oder auch mehrerer aufeinanderfolgender States auf den Phasenanschluss gelegte obere Potenzial $V_{batt}$ der Gleichspannungsquelle ist in Figur 2 pulsweitenmoduliert dargestellt. Das heißt, dieses Potenzial wird mit bestimmter Frequenz innerhalb des Kommutierungswinkels KW, gesteuert durch das Steuersignal 1_high, zu- und abgeschaltet. Das Verhältnis von Zu- und Abschaltzeit wirkt sich auf die vom Elektromotor abgegebene Leistung aus. Das Überschwingen des Phasen-Signals U1, das sich aus dem Induktionssignal Ui und dem jeweiligen auf die Phase geschalteten Potenzial der Gleichspannungsquelle (0V/$V_{batt}$) zusammensetzt, bei jedem Abschaltvorgang unter das 0V-Potenzial, ist auf das induktive Verhalten der Phasen-Wicklungen zurückzuführen.

Während State S3 ist die Signal-Phase P1 von beiden Potenzialen der Gleichspannungsquelle getrennt. Innerhalb dieses States wird das isolierte Induktionssignal Ui sichtbar, da es nicht von einem Batteriepotenzial überlagert ist. In diesem Bereich befindet sich auch der Punkt XS, in dem das sinusähnliche Induktionssignal Ui die Sinus-Achse S schneidet, was auch als 0-Durchgang der Sinuskurve bezeichnet werden kann. Dieser Punkt entspricht einer zugeordneten Rotorposition in Bezug auf den Stator innerhalb eines elektrischen Zyklus der Signal-Phase P1.

Es ist jedoch zu beachten, dass auch hier nach dem Abschalten des Batteriepotenzials $V_{batt}$ ein induktionsbedingtes Überschwingen des Pasen-Signals U1 unter das 0V-Niveau zu verzeichnen ist. Dadurch wird die Sinus-Achse S vom Phasen-Signal U1 zunächst in Richtung 0V-Niveau und dann wieder entgegengesetzt gerichtet überschritten, bevor das Induktionssignal Ui mit seinem sinusähnlichen Verlauf sichtbar wird. Dieser Bereich des Überschwingens muss beim Ermitteln der Rotorposition ausgeblendet werden.

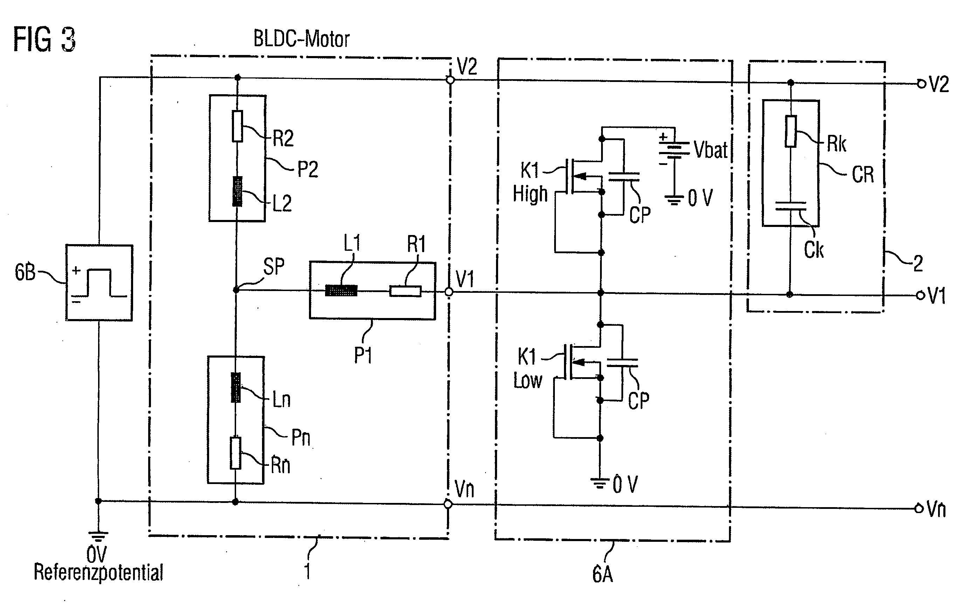

Das Schaltbild der Figur 3 zeigt eine Motor-Phasenanordnung P1, P2, Pn eines BLDC-Motors 1, eine Pulsquelle 6B an den Phasenanschlüssen V2 und Vn, eine konkret dargestellte Anordnung der Leistungs-Schaltelemente (K1_High und K1_Low) 6A am Phasenanschluss V1 einer Signal-Phase P1 sowie die Anordnung des kapazitiven Entstörbauteils 2 (CR) zwischen den Phasenanschlüssen V1 und V2 der Motor-Phasen P1 bzw. P2. Das Entstörbauteil 2 besteht dabei aus einem Widerstand Rk und einem Kondensator Ck, die in Reihe geschaltet sind.

Der BLDC-Motor 1 ist hier als dreiphasiger Motor ausgeführt. Die Pulsquelle 6B ist eine vereinfachte Darstellung der Halbbrücken-Anordnungen von Leistungs-Schaltelementen der Motor-Phasen P2 und Pn und kann als mit einer PWM-Frequenz schwingend angenommen werden.

Bei dynamischen Vorgängen wirken die parasitären MOSFET-Kapazitäten Cp der Leistungs-Schaltelemente K1-High und K1-Low der Phase P1 derart, dass diese als parallel auf Masse geschaltet angenommen werden können. Mit dem kapazitiven Entstörbauteil 2 (CR) kann nun die Brückenschaltung, bestehend aus Motor-Phase P2, Motor-Phase Pn, 2xCp und der zu messenden Signal-Phase P1, so abgeglichen werden, dass die Kleinsignal-Potenzialdifferenz zwischen einem Sternpunkt SP und dem Phasenanschluss V1 Null ist.

Idealerweise entspricht der Kapazitätswert Ck des kapazitiven Entstörbauteils 2 (CR) der Gesamtkapazität der zugeordneten parasitären MOSFET-Kapazitäten Cp. In diesem Fall ergibt sich der Kapazitätswert Ck zu Ck = 2 x Cp. Der Widerstand Rk dient dabei zur Begrenzung des Kompensationsstromes durch das Entstörbauteil 2.

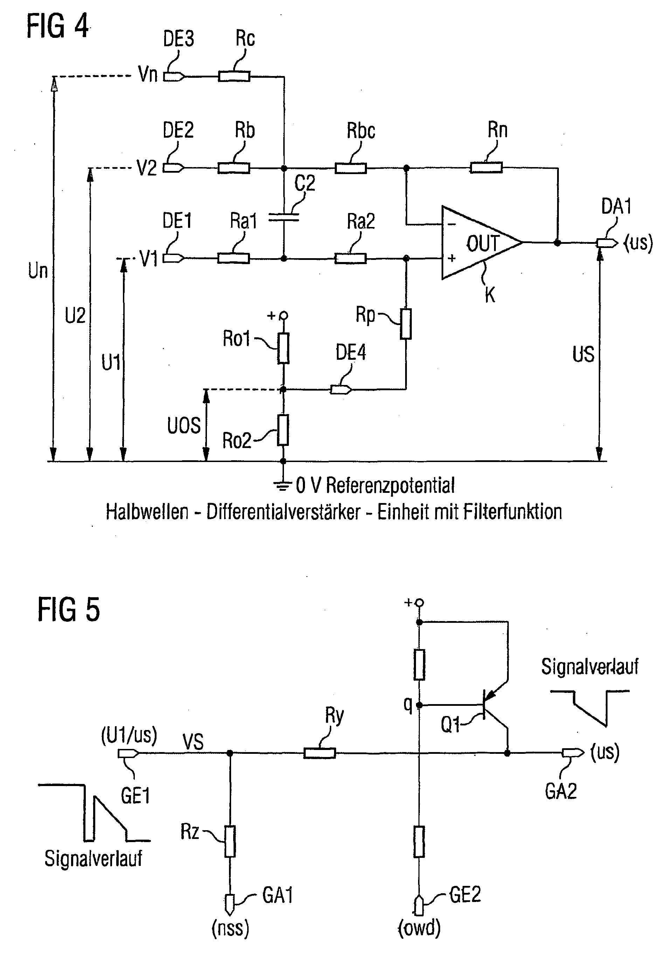

In Figur 4 ist ein Schaltungsaufbau einer Halbwellen-Differentialverstärker-Einheit, HDV-Einheit, mit zusätzlicher Filterfunktion für einen dreiphasigen BLDC-Motor dargestellt. Die HDV-Einheit weist drei Signaleingänge DE1, DE2 und DE3 für die Phasenanschlüsse V1, V2 und Vn der Motor-Phasen P1, P2 und Pn und einen weiteren Signaleingang DE4 für ein Offset-Signal uos auf. Weiter weist die HDV-Einheit ein Komparatorbauteil K und ein Kondensator C2 sowie diverse Widerstände Rx auf. Am Signalausgang DA1 wird ein Auswertesignal us bereitgestellt.

In die HDV-Einheit, die eine Komponente der Signalaufbereitungseinheit 4C darstellen kann, werden über die Signaleingänge DE1, DE2 und DE3 die Phasensignale U1, U2 bzw. Un der Signal-Phase P1 bzw. der im Kommutierungszyklus benachbarten Motor-Phasen P2 und Pn eingespeist. Über den weiteren Signaleingang DE4 wird ein konstantes Offset-Signal uos eingespeist. Das Offset-Signal uos dient dazu den Bezug zu einem Referenzpotential herzustellen und kann durch einen einfachen Spannungsteiler, bestehend aus Ro1 und Ro2, an einer Gleichspannungsquelle (nicht dargestellt) bereitgestellt werden, deren 0V-Potenzial das 0V-Referenzpotenzial bildet.

Die drei Phasensignale U1, U2 und Un werden über die Widerstände und das Komparatorbauteil K gemäß der Beziehung

$$us = \frac{2}{3} \cdot U1 - \frac{1}{3} \cdot \left( U2 + Un \right)$$

miteinander verknüpft und auf das 0V-Referenzpotenzial einer Gleichspannungsquelle bezogen. Als Ergebnis liegt am Signalausgang DA1 der HDV-Einheit eine Spannung US bezogen auf das 0V-Referenzpotenzial der Gleichspannungsquelle an, das im Weiteren als Auswertesignal us bezeichnet wird.

Dazu wird mit den Widerständen Rn, Rb und Rbc sowie aus Rn, Rc und Rbc jeweils das Verhältnis 1:3 gemäß der Beziehung

$$\frac{Rn}{Rb + 2 \cdot Rbc} = \frac{Rn}{Rc + 2 \cdot Rbc} = \frac{1}{3}$$

eingestellt und mit den Widerständen Ra1, Ra2, dem Innenwiderstand Ro der Offset-Signalquelle und Rp wird das Verhältnis 2:3 gemäß der Beziehung

$$\frac{Rp + Ro}{Ra1 + Ra2} = \frac{2}{3}$$

eingestellt.

Ein Kondensator C2 bildet zusammen mit den Widerständen Rb, Rc und Ra1 einen Filter zur Unterdrückung von Störsignalen, die den Phasen-Signalen überlagert sind und die nicht bereits durch ein vorgelagertes Entstörbauteil (CR) kompensiert worden sind. Um eine hohe Störunterdrückung zu erreichen muss dieses Filter gut von der ihn umgebenden Schaltungsanordnung entkoppelt werden. Dazu sollte Rbc >> Rb, Rc und Ra2 >> Ra1 gewählt werden. Bei einem Gesamtverstärkungsfaktor von eins ist ein optimaler Signal-Rauschabstand gewährleistet.

Durch Knoten- und Maschenanalyse kann gezeigt werden, dass die Auswertesignal us am Signalausgang DA1 der HDV-Einheit dem Phasensignal U1 der Signal-Phase P1 proportional ist. Bedingung dafür ist, dass die Phasen-Induktivität winkelunabhängig ist und dass von der Halbbrücke der Phase P1 kein Strom mehr zum korrespondierenden Phasenanschluss V1 fließt. Bei einem Gesamtverstärkungsfaktor von eins, entspricht das am Signalausgang DA1 anliegende Auswertesignal us dem an der Signal-Phase P1 anliegenden Phasensignal U1, das zur Positionsbestimmung des Rotors ausgewertet werden soll.

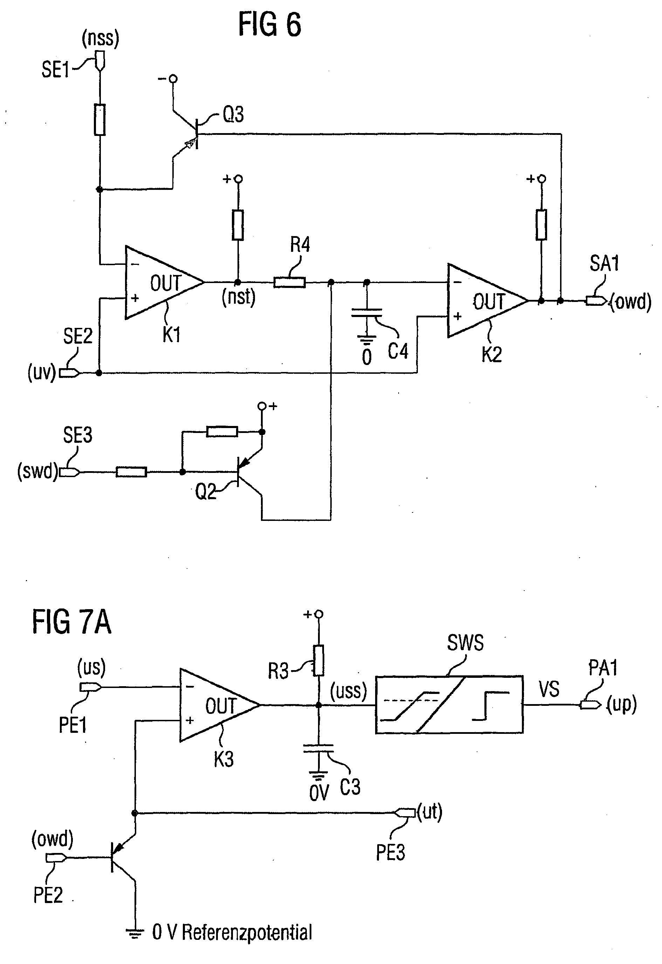

In Figur 5 wird ein Ausführungsbeispiel eines Gate-Generators dargestellt, der ein weiterer Bestandteil einer Signalaufbereitungseinheit 4C sein kann. Der Gate-Generator besteht im Wesentlichen aus einem Gate-Schaltelement Q1, welches ein Plus-Potenzial einer Gleichspannungsquelle (nicht dargestellt) und eine Signalleitung VS verbindet. Der Gate-Generator weist zwei Signaleingänge GE1 und GE2 sowie zwei Signalausgänge GA1 und GA2 auf.

Ein Phasensignal U1 der Signal-Phase P1 kann direkt oder nach vorheriger Aufbereitung, wie zum Beispiel mittels einer HDV-Einheit nach Figur 4, als Auswertesignal us am Signaleingang GE1 in die Signalleitung VS des Gate-Generators eingespeist werden. Der Gate-Generator dient zur weiteren Aufbereitung des Phasen- oder Auswertesignals U1/us, welches zur Positionsermittlung herangezogen wird.

Am Signaleingang GE2, der mit dem Steueranschluss q des Gate-Schaltelementes Q1 verbunden ist, liegt ein Open-Window-Steuersignal, im Weiteren auch als owd-Signal bezeichnet, an, durch welches das Gate-Schaltelement Q1 betätigt wird.

Zunächst wird an der Signalleitung VS, an der das Auswertesignal us anliegt, über einen Entkopplungswiderstand Rz ein sogenanntes Nullstromsignal nss auf den Signalausgang GA1 ausgekoppelt. Dieses Nullstromsignal nss wird zur Initialisierung des owd-Signals owd in einem externen, in Figur 5 nicht dargestellten Signalgeber herangezogen.

Vor dem Anschlusspunkt des Gate-Schaltelementes Q1 befindet sich in der Signalleitung VS ein zweiter Entkopplungswiderstand Ry. Mit Hilfe des Gate-Schaltelementes Q1 wird, gesteuert durch das owd-Signal owd das positive Potenzial einer Gleichspannungsquelle auf die Signalleitung VS geschaltet. Das owd-Signal sperrt das Gate-Schaltelement Q1 solange eine gültiges Induktionssignal am Phasenanschluss V1 der Signal-Phase P1 zu erwarten ist. Dies ist der Fall sobald die Signal-Phase P1 potenzialfrei geschaltet ist und kein Freilaufstrom mehr in dieser Phase fließen kann. Außerhalb dieses Bereiches ist das Gate-Schaltelement Q1 aufgrund des owd-Signals durchgeschaltet und die Signalleitung VS ist auf das positive Potenzial der Gleichspannungsquelle geschaltet. Auf diese Weise wird aus dem Gesamtverlauf des Auswertesignals us nur der für die Positionsbestimmung relevante Bereich innerhalb des Beobachtungszeitraums zur weiteren Auswertung am Signalausgang GA2 bereitgestellt.

Figur 6 zeigt eine Schaltungsanordnung eines Signalgebers, der zur Bereitstellung eines Open-Window-Steuersignals, owd-Signal, dient, welches den Beobachtungszeitraum für das Auswertesignal us bestimmt. Der Signalgeber weist drei Signaleingänge SE1, SE2 und SE3 sowie einen Signalausgang SA1 auf. Die Schaltungsanordnung besteht im Wesentlichen aus zwei Komparator-Bauelementen K1 und K2 und zwei Schaltelementen Q2 und Q3.

Das owd-Signal owd wird in Abhängigkeit von einem Nullstromsignal nss am Signaleingang SE1, einem Offset-Vergleichssignal uv am Signaleingang SE2 und einem State-Window-Signal swd, im Weiteren auch als swd-Signal bezeichnet, am Signaleingang SE3 erzeugt und am Signalausgang SA1 des Signalgebers bereitgestellt.
Mit der dargestellten Schaltung wird der Freilaufstrom der Signal-Phase P1 ausgewertet und abhängig davon das owd-Signal erzeugt, wobei das owd-Signal der Dauer des Freilaufstromes dynamisch anpasst wird.

Das Komparator-Bauelement K1 vergleicht das am Signaleingang SE1 anliegende Nullstromsignal nss mit dem fest vorgegebenen konstanten Offset-Vergleichssignal uv. Das Offset-Vergleichssignal uv kann von der Steuer-Gleichspannungsquelle über einen einfachen Spannungsteiler zur Verfügung gestellt werden, welcher in Figur 6 nicht dargestellt ist. Das Ausgangssignal nst des Komparator-Bauelementes K1, das im Weiteren auch als nst-Signal bezeichnet wird, ist so lange positiv, wie ein Freilaufstrom in der Signal-Phase fließt. Das nst-Signal wird mit einem RC-Glied, bestehend aus dem Widerstand R4 und dem Kondensator C4, geglättet. Durch die gleichzeitige Entkopplung mittels des Widerstandes R4 ergibt sich für das Nullstromsignal nss und das swd-Signal swd, das über den Signaleingang SE3 eingespeist und mittels des Schaltelement Q2 auf das nst-Signal aufgeschaltet wird, eine UND-Verknüpfung. Das nachgeschaltete Komparator-Bauelement K2 vergleicht dieses UND-verknüpfte Signal mit dem konstanten Offset-Vergleichssignal uv und liefert an seinem Ausgang das gewünschte owd-Signal owd, das die Beobachtungszeitdauer für das Auswertesignal us bestimmt.

Sobald also innerhalb der über das swd-Signal swd vorgegebenen Statusdauer ein gültiges Induktionssignal zu erwarten ist, ist das owd-Signal positiv. Das swd-Signal kann von der Hauptsteuereinheit 4 vorgegeben werden. Durch die Rückkopplung des owd-Signals über das Schaltelement Q3 auf den Signaleingang SE1 des Komparators K1 wird beim Auftreten der ersten positiven Signal-Flanke am Signalausgang SA1 das owd-Signal gesetzt und stabil gehalten. Dadurch wird verhindert, dass Störungen im Nullstromsignal nss das owd-Signal vorzeitig löschen. Durch Zurücksetzen des swd-Signals wird das owd-Signal ebenfalls zurückgesetzt.

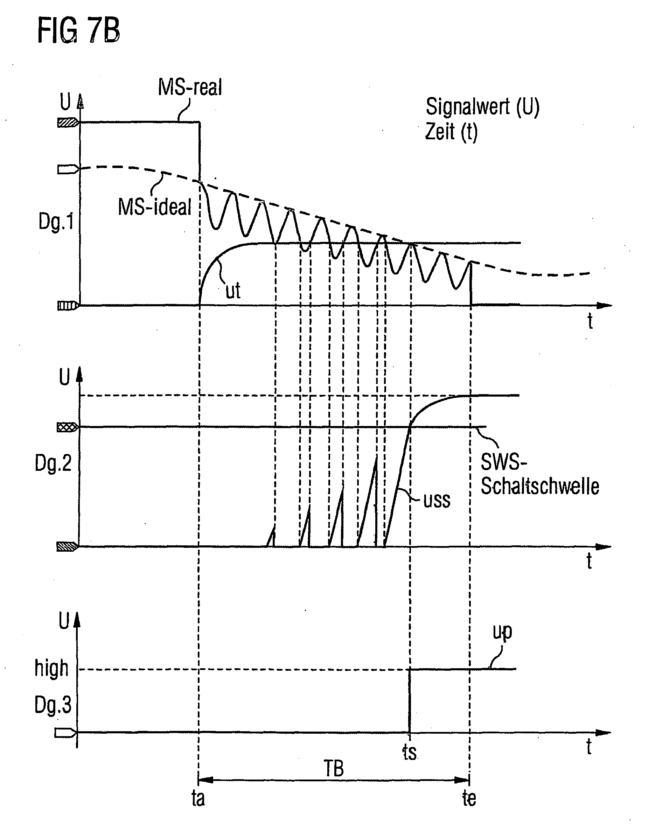

Die in Figur 7A schematisch dargestellte Schaltungsanordnung eines Positionsdetektors mit Digitalfilter weist im Wesentlichen ein Komparatorbauteil K3 und einen Schwellwertschalter SWS sowie einen Kondensator C3 auf. Über die drei Signaleingänge PE1, PE2 und PE3 werden auszuwertende Signale und Steuersignale in den Positionsdetektor eingespeist und zu einem Positionssignal up verarbeitet, das am Signalausgang PA1 anliegt. Der zeitliche Verlauf der einzelnen Signale wird in den drei Diagrammen Dg.1, Dg.2 und Dg.3 der Figur 7B dargestellt.

Das Positionssignal up wird durch den Vergleich des Auswertesignals us mit einem Schwellwertsignal ut erzeugt. Hierzu vergleicht das Komparatorbauteil K3 das Auswertesignal us mit dem Schwellwertsignal ut und liefert ein positives Ausgangssignal, sobald der Wert des Schwellwertsignals ut unterschritten wird. Je höher dabei das am Signaleingang PE3 anliegende Schwellwertsignal ut ist, desto früher wird dies vom Auswertesignal unterschritten.

Aufgrund der restlichen, dem Auswertesignal us überlagerten Störungen sind am Ausgang des Komparatorbauteils K3 zunächst nur kurz auftretende Signalsprünge mit zunehmender Einschaltdauer sichtbar. Dies ergibt sich daraus, dass die überlagerten Störschwingungen zunächst nur kurzzeitig den Wert des Schwellwertsignals ut unterschreiten.

Ein nachgeschaltetes RC-Glied, bestehend aus einem Widerstand R3 und dem Kondensator C3, erzeugt aus den Signalsprüngen ein Schaltsignal uss mit Signalspitzen mit einer der Einschaltdauer proportionalen Spannungshöhe. Dieses so pulsierende Schaltsignal uss wird in einen nachfolgenden Schwellwertschalter SWS mit definierter Schaltschwelle, beispielsweise einen Schmitt-Trigger, gespeist. Sobald nun das Auswertesignal us für eine ausreichend lange Zeitdauer den Wert des Schwellwertsignals ut andauernd unterschreitet, wächst das Schaltsignal uss auf einen Wert an, der die interne Schaltschwelle des nachfolgenden Schwellwertschalters SWS überschreitet. Sobald diese Schaltschwelle überschritten ist, wird am Signalausgang PA1 des Schwellwertschalters SWS das Positionssignal up gesetzt, das heißt auf High-Potenzial angehoben. Somit korrespondiert die Anstiegsflanke des Positionssignals up mit einer bestimmten Drehlage des Rotors. In Abhängigkeit von diesem Positionssignal up wird die Kommutierung der Motorphasen vorgenommen. Auf diese Weise arbeitet das RC-Glied R3/C3 im Zusammenspiel mit dem Schwellwertschalter SWS entprellend als digitales Filter.

Im Diagramm Dg.1 der Figur 7B sind die Verläufe der Signalwerte (U) des mit Störschwingungen überlagerten Auswertesignals us-real und des Schwellwertsignals ut dargestellt. Die gestrichelte Linie zeigt ein idealisiertes Auswertesignal us-ideal, an dessen theoretischem Schnittpunkt mit dem Schwellwertsignal das Positionssignal up gesetzt, das heißt digital auf High-Potenzial angehoben wird. Dies ist in Diagramm Dg.3 dargestellt. Dem Schaltzeitpunkt für das Positionssignal up wird also mit Hilfe der in Figur 7A gezeigten Schaltung quasi ein idealisierter Verlauf des Auswertesignals us-ideal zugrunde gelegt. Das Schwellwertsignal ut wird erst zum Zeitpunkt ta, an dem die Signal-Phase P1 potenzialfrei geschaltet wird und der den Beginn des Beobachtungszeitraumes TB darstellt, auf seinen voreingestellten Wert stetig angehoben. Der Zeitpunkt te stellt das Ende des Beobachtungszeitraumes, innerhalb dem der Signalvergleich stattfindet, dar. Zum Zeitpunkt ts unterschreitet das idealisierte Auswertesignal us-ideal das Schwellwertsignal ut und das Positionssignal up wird gesetzt.

Das Diagramm Dg.2 zeigt den Verlauf des Schaltsignals uss und die Schaltschwelle des Schwellwertschalters SWS. Wird das Schwellwertsignal ut vom Auswertesignal us-real unterschritten beginnt das Schaltsignal uss, durch das RC-Glied R3/C3 verzögert anzuschwellen und fällt wieder ab sobald das Auswertesignal us-real wieder über den Wert des Schwellwertsignals ansteigt. Erst wenn das Auswertesignal us-real das Schwellwertsignal ut lang genug unterschreitet, erreicht das Schaltsignal uss die Schaltschwelle des Schwellwertschalters, der dann das Positionssignal up setzt, das heißt sprunghaft auf High-Potenzial anhebt.

Der Zeitpunkt, wann das Positionssignal up gesetzt wird, hängt somit von dem Wert des Schwellwertsignals ut und der Filterzeitkonstante des RC-Gliedes R3/C3 ab. Idealerweise wird die Filterzeitkonstante genau auf die Frequenz der Pulsweitenmodulation der Leistungsansteuerung abgestimmt. Bei variierender Pulsweite kann dies auch dynamisch erfolgen.

In Bild 8 zeigt einen Schwellwertgeber, der ein in seinem Wert variables Schwellwertsignal ut an einem Signalausgang WA1 bereitstellt. Dazu weist der Schwellwertgeber einen Analogwertgeber AWG und ein Schaltelement Q4 sowie einen Signaleingang WE1 und mehrere Signaleingänge WEX auf.

Über die Signaleingänge WEX werden Anforderungssignale sax in den Analogwertgeber eingespeist. Aus diesen Anforderungssignalen sax erzeugt der Analogwertgeber AWG ein analoges Signal. Die digitalen Anforderungssignale sax werden zum Beispiel von einer zentralen Steuereinheit eingespeist und in ein Analogsignal gewandelt, das den Wert des Schwellwertsignals ut darstellt.

Mit dem Schaltelement Q4 kann der Analog-Ausgang des Analogwertgebers AWG in Abhängigkeit von einem Schwellwert-Aktivierungssignal uta, im Weiteren auch als uta-Signal bezeichnet, auf 0V-Referenzpotenzial einer Gleichspannungsquelle geschaltet werden. Sobald das uta-Signal auf High-Potenzial gesetzt ist, sperrt das Schaltelement Q4 und der Wert des Schwellwertsignals ut steigt, verzögert durch den Kondensators C5, auf den über die Anforderungssignale sax definierten Grenzwert an. Die Zeitkonstante, nach der das Schwellwertsignal ut ansteigt, wird durch die Kombination und Dimensionierung von Widerständen und dem Kondensator C5 bestimmt. Die Anforderungssignale sax und somit die Höhe des Schwellwertsignals ut kann von einer Hauptsteuereinheit an die aktuelle Rotorgeschwindigkeit dynamisch angepasst vorgegeben werden.

Als Schwellwert-Aktivierungssignal uta kann ein Open-Window-Steuersignal owd, wie es zum Beispiel durch einen Signalgeber wie in Figur 6 dargestellt erzeugt wird, mitbenutzt werden. In diesem Fall wird das Schwellwertsignal ut genau zu dem Zeitpunkt aktiviert, zu dem der Beobachtungszeitraum für das Auswertesignal us beginnt, der ebenfalls durch das Open-Window-Steuersignal owd bestimmt wird.

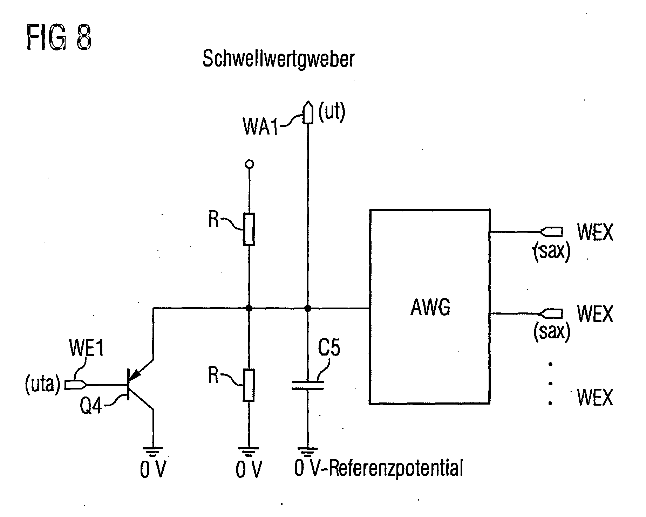

Zur Aufbereitung des Phasensignals der Signal-Phase P1 und zur Erzeugung des Positionssignals up können die in den Figuren 3 bis 8 dargestellten Komponenten, teilweise oder vollständig miteinander kombiniert und in einer Signalaufbereitungseinheit 4C, wie in Figur 1 dargestellt, zusammengefasst werden. Bei einer solchen Kombination wirken die Einzelkomponenten und die jeweiligen Signale abhängig von einander zusammen.

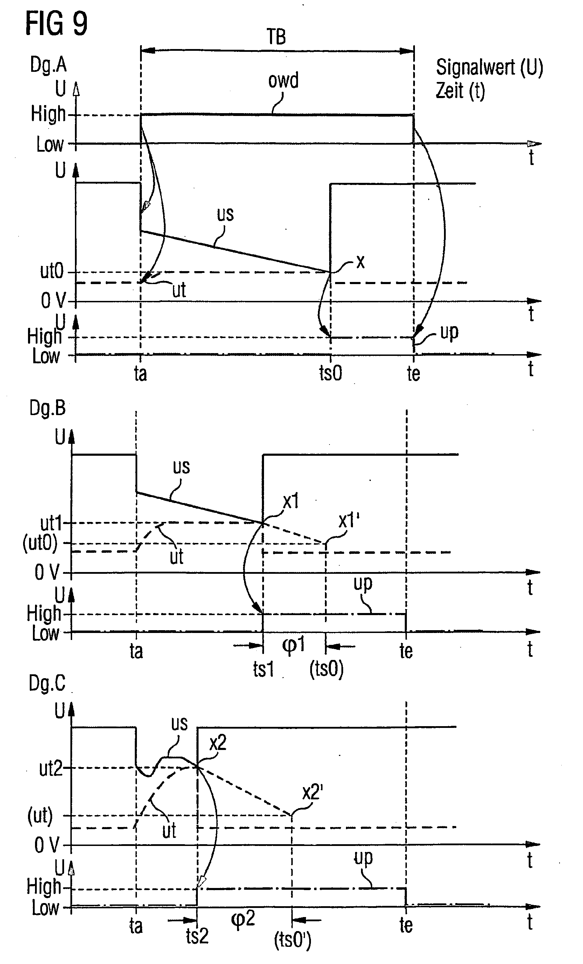

Die in Figur 9 dargestellten Signalverläufe der für die Drehlagebestimmung des Rotors wichtigen Signale sind ein Auswertesignal us, ein Open-Window-Steuersignal owd, ein Schwellwertsignal ut sowie ein daraus erzeugtes Positionssignal up. Diese sind in den Signal-Diagrammen Dg.A, Dg.B und Dg.C der Figur 9 mit dem Signalwert U über dem zeitlichen Verlauf t dargestellt. Dabei zeigen die drei Diagramme der Figur 9 die Signalwertverläufe bei unterschiedlichen der Reihenfolge der Diagramme nach steigenden Rotor-Drehgeschwindigkeiten.

Das Diagramm Dg.A zeigt im oberen Teil den Verlauf des owd-Signals owd, das den Beobachtungszeitraum TB für das Auswertesignal us definiert. Der Beobachtungszeitraum beginnt, zum Zeitpunkt ta wenn das owd-Signal auf High-Potenzial wechselt. Im mittleren Teil des Diagramms Dg.A ist der Verlauf des Auswertesignals us zusammen mit dem Schwellwertsignal ut dargestellt. Dabei ist das Auswertesignal idealisiert, ohne überlagerte Störungen dargestellt. Beginnend zum Zeitpunkt ta wird innerhalb des Beobachtungszeitraumes TB der Verlauf des in einer Signal-Phase induzierten Signals durch das Auswertesignal us abgebildet. Initialisiert durch das owd-Signal owd beginnt gleichzeitig zum Zeitpunkt ta der Wert des Schwellwertsignals ut auf seinen voreingestellten Wert ut0 anzusteigen. Dieser Wert ut0 des Schwellwertsignals ut wird in Abhängigkeit von der aktuellen Rotorgeschwindigkeit zum Beispiel über eine Hauptsteuereinheit und einen Schwellwertgeber voreingestellt. Diagramm Dg.A zeigt die Signalverläufe bei der Ausgangsdrehgeschwindigkeit V0 des Rotors. Das Schwellwertsignal ut0 ist von einem Offsetwert überlagert, liegt also bereits vor dem Zeitpunkt ta über dem 0V-Potenzial. Der Anstieg des Schwellwertsignals ut0 verläuft beispielsweise gemäß der in einem zugeordneten R/C-Glied eines Schwellwertgebers definierten Zeitkonstante. Der Schnittpunkt X zwischen dem Auswertesignal us und dem Schwellwertsignal ut0 ergibt sich bereits vor Ablauf des Beobachtungszeitraumes TB zum Zeitpunkt ts0. Initialisiert durch diesen Schnittpunkt X erfolgt zu diesem Zeitpunkt ts0 der Wechsel des Positionssignals up von vorher Low-Potenzial auf High-Potenzial, was im unteren Teil des Diagramms Dg.A dargestellt ist. Von diesem Signalwechsel hängt der darauffolgende Kommutierungszeitpunkt der Motor-Phasen ab. Am Ende des Beobachtungszeitraumes, wird zum Zeitpunkt te das owd-Signal auf Low-Potenzial zurückgesetzt. Dies hat zur Folge, dass auch das Positionssignal up wieder auf Low-Potenzial zurückgesetzt wird. Im darauffolgenden Kommutierungszyklus wird das Positionssignal up wieder neu gesetzt.

Zur Erhöhung der Geschwindigkeit des Rotors wird der Kommutierungszeitpunkt bezogen auf die Rotorposition zeitlich nach vorne verschoben wodurch eine voreilende Kommutierung erzielt wird. Das umlaufende Magnetfeld eilt dadurch dem sich drehenden Rotor um einen bestimmten Drehwinkel voraus. Dieser Winkel wird als Vorzündwinkel $\varphi$ bezeichnet. Der Rotor wird durch das voreilende Magnetfeld nachgezogen und somit beschleunigt. Die Einstellung des Vorzündwinkels $\varphi$ kann vorgenommen werden indem der Wert des Schwellwertsignals ut erhöht wird. Dies ist in Diagramm Dg.B der Figur 9 dargestellt.

Mit Beginn des Beobachtungszeitraumes TB zum Zeitpunkt ta steigt das Schwellwertsignal ut auf einen gegenüber dem Wert ut0 erhöhten Wert ut1. Dadurch schneidet das Auswertesignal us das Schwellwertsignal ut im Schnittpunkt X1 zum Zeitpunkt ts1 und somit früher als bei ut=ut0, wodurch wiederum das Positionssignal up, das die Kommutierung auslöst, ebenfalls früher gesetzt wird. Die zeitliche Spanne zwischen den Zeitpunkten ts1 und ts0 repräsentiert den Vorzündwinkel $\varphi$1.

Die weitere Erhöhung der Rotorgeschwindigkeit und des korrespondierenden Schwellwertsignals ist in Diagramm Dg.C der Figur 9 dargestellt. Es ist zu erkennen, dass durch die erhöhte Drehgeschwindigkeit des Rotors auch der theoretische Schnittpunkt X2' des Auswertesignals us mit dem ursprünglichen Schwellwertsignal ut=ut0 zeitlich auf einen früheren Zeitpunkt ts0' gerückt ist. Das Schwellwertsignal ut ist auf einen weiter erhöhten Wert ut=ut2 gesetzt, wodurch ein weiter vergrößerter Vorzündwinkel $\varphi$2 erzeugt wird. Aufgrund des sehr großen Vorzündwinkels wird die in der Signalphase induzierte Spannung höher als die anliegende Batteriespannung einer Motor-Gleichspannungsquelle. Dadurch wird wiederum eine Freilaufdiode eines zugeordneten Leistungsschaltelementes leitend, was in einen überschwingenden Verlauf des Auswertesignals us zu Beginn des Beobachtungszeitraums TB resultiert.

In diesem Fall wird mit einem verzögerten stetigen Anstieg des Schwellwertsignals ut auf seinen voreingestellten Wert ut2 ein verfrühter Schnittpunkt des überschwingenden Auswertsignals us mit dem Schwellwertsignal ut und somit eine Fehl-Kommutierung vermieden.

Bei weiter überhöhten Spannungsanstiegen im Induktionssignal der Signal-Phase vergrößert sich der plateauförmig ausgebildete Bereich im Verlauf des Auswertesignals us, der den Bereich kennzeichnet in dem die Freilaufdiode leitend wird. Dadurch verschiebt sich der absinkende Verlauf des Auswertesignals und somit der Schnittpunkt X2 zeitlich nach hinten, wodurch sich der Vorzündungswinkel $\varphi$2 automatisch reduziert. Dies hat einen stabilisierenden Effekt und eine hohe Unempfindlichkeit gegenüber Last-, Stör- oder Führungssprüngen zur Folge.

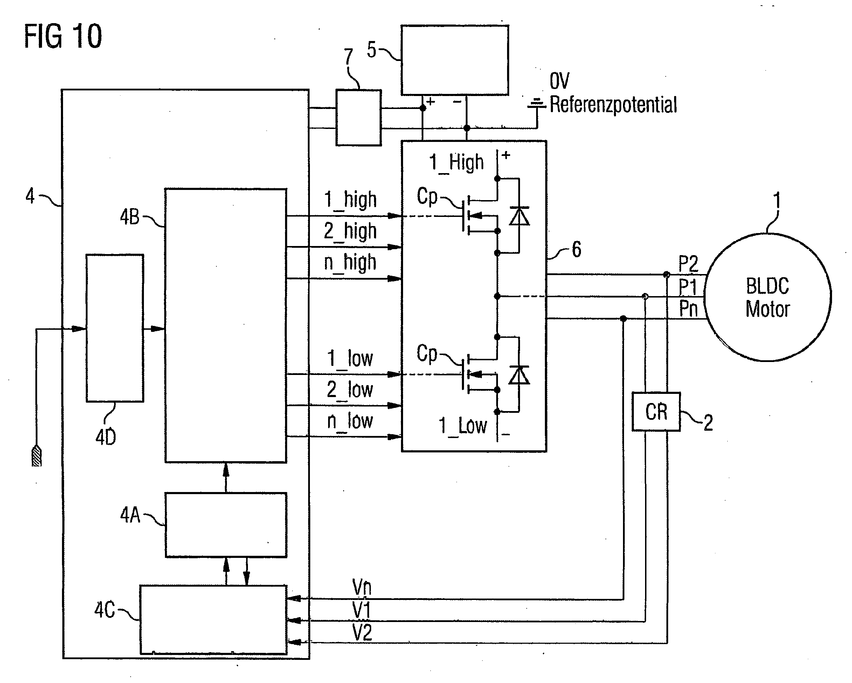

Die einzelnen vorgenannten Schaltungsanordnungen für das kapazitive Entstörbauteil, die Halbwellen-Differentialverstärker-Einheit mit Filterfunktion, den Gate-Generator, den Signalgeber, den Positionsdetektor mit Digitalfilter sowie den Schwellwertgeber können in Teilen in unterschiedlichen Kombinationen oder auch vollständig in einer separat aufgebauten Schaltungseinheit zur Induktionssignal-Verarbeitung kombiniert werden. Ebenso können die einzelnen mit den beschriebenen Schaltungsanordnungen durchführbaren Verfahrensschritte oder Teilverfahren auch mit Hilfe ähnlich aufgebauter Schaltungsanordnungen oder auch durch Rechenalgorithmen in einer Steuereinheit durchgeführt werden. Die Steuereinheit kann dazu einen oder mehrere Mikroprozessoren enthalten. Figur 10 zeigt die Gesamtanordnung einer Steuerungseinheit eines BLDC-Motors 1 ohne separat aufgebaute Schaltungsanordnung zur Aufbereitung eines Phasen-Signals. Hier werden die erforderlichen Funktionen zur Aufbereitung, Verstärkung, Filterung und Auswertung des Phasen-Signals und die Generierung eines Positionssignals zur Einspeisung in weitere Funktionsbausteine, direkt von einer zentralen Hauptsteuereinheit 4 ausgeführt. Im Blockschaltbild der Figur 10 sind die einzelnen Funktionsbausteine der Hauptsteuereinheit 4 schematisiert dargestellt. Diese sind ein Positionsverarbeitungsmodul 4A, ein Kommutierungsmodul 4B, ein Signalverarbeitungsmodul 4C und einen Pulsweiten-Generator 4D. Zur Spannungsversorgung sowohl des BLDC-Motors 1 als auch der Hauptsteuereinheit und einer Leistungssteuereinheit ist nur eine gemeinsame Gleichspannungsquelle 5 vorgesehen. Eine ggf. erforderliche Anpassung der Spannungshöhe an spezielle Erfordernisse der Hauptsteuereinheit erfolgt mit einem Spannungsregler 7 oder mit einer funktional ähnlich wirkende Einheit wie zum Beispiel einem Spannungswandler oder Spannungsstabilisator.

Ein kapazitives Entstörbauteil 2 (CR) ist nach wie vor mit separaten Schaltungselementen aufgebaut und zwischen zwei Motor-Phasen angeordnet.

## Patentansprüche

1. Schaltungsanordnung zum Ansteuern eines bürstenlosen permanenterregten Gleichstrommotors (BLDC-Motor, 1), der einen Rotor, einen Stator und mehrere Phasen(P1, P2, ....Pn) mit jeweils einem äußeren Phasenanschluss (V1, V2,...Vn) aufweist,

   - mit einer Leistungssteuereinheit (6), an welche die Phasen, eine Leistungs-Gleichspannungsquelle (5) und eine Hauptsteuereinheit (4) angeschlossen sind,
   - wobei die Hauptsteuereinheit (4), die auch mit den Phasenanschlüssen elektrisch verbunden ist, die Leistungssteuereinheit (6) in Abhängigkeit von einem durch die Rotation des Rotors induzierten elektrischen Induktionssignals (U1) nur einer der Phasen (P1, P2,..... Pn), der Signalphase (P1), so ansteuert, dass die Phasen abhängig von der relativen Drehposition des Rotors elektrisch in zyklischer Reihenfolge (P1, P2, P3,...Pn oder Pn,...P3, P2, P1), zeitlich versetzt, für jeweils eine Kommutierungszeitdauer, wechselnd mit einem höheren oder einem niedrigeren Spannungspotenzial der Motor-Gleichspannungsquelle (5) elektrisch leitend verbunden oder von beiden Spannungspotenzialen elektrisch getrennt sind, und
   - **dadurch gekennzeichnet, dass** unmittelbar zwischen dem äußeren Phasenanschluss(V1) der Signal-Phase (P1) und dem äußeren Phasenanschluss (V2 oder Vn) einer der im elektrischen Zyklus benachbarten Phasen (P2 oder Pn) und nur zwischen diesen beiden Phasenanschlüssen ein kapazitives Entstörungsbauteil (CR) angeordnet ist, das als Teil einer Brückenschaltung wirkt, welche die folgenden Komponenten aufweist:

      a) die beiden der Signal-Phase (P1) benachbarten Phasen (P2 und Pn),
      b) eine parasitäre Gesamtkapazität ($2xC_P$) der elektronischen Komponenten ($C_P$) der Leistungssteuerung, welche der Signal-Phase zugeordnet sind,
      c) die Signal-Phase (P1), welche die Messbrücke bildet, an der das Induktionssignal gemessen wird, und
      d) das Entstörungsbauteil (CR), das so dimensioniert ist, dass die Brückenschaltung abgeglichen ist.

2. Schaltungsanordnung nach Anspruch 1, **gekennzeichnet durch** einen Pulsweitengenerator, der pulsweitenmodulierte Steuersignale bereitstellt, mit deren Hilfe die elektrisch leitende Verbindung der Phasen mit dem höheren oder dem niedrigeren Potenzial der Leistungs-Gleichspannungsquelle während der Kommutierungszeitdauer pulsweitenmoduliert in einem variierbaren Pulsweitenverhältnis geschaltet wird.

3. Schaltungsanordnung nach Anspruch 1 oder 2, **gekennzeichnet durch** eine Halbwellen-Differentialverstärker-Einheit mit Filterfunktion, die eingangsseitig an die Phasenanschlüsse (V1, V2 und Vn) der Signal-Phase (P1) sowie der beiden im elektrischen Zyklus benachbarten Phasen (P2 und Pn) angeschlossen ist und mit einer ausgangsseitigen Signalleitung (DA1) an der ein Auswertesignal (us) anliegt, das dem Induktionssignal (U1) der Signal-Phase (P1) proportional ist.

4. Schaltungsanordnung nach einem der Ansprüche 1 bis 3, **gekennzeichnet durch** einen Gate-Generator, der mit der Signal-Phase (P1) oder einer Signalleitung (VS), an der das Induktionssignal (U1) bzw. das Auswertesignal (us) anliegt, verbunden ist, und

   - der zum Ausblenden des Induktionssignals (U1) bzw. des Auswertesignals (us) in Abhängigkeit von einem Open-Window-Steuersignal (owd) dient, wodurch ein Beobachtungszeitraum im elektrischen Zyklus definiert wird, in dem das Auswertesignal (us) gemessen werden kann.

5. Schaltungsanordnung nach Anspruch 4, **gekennzeichnet durch** einen Signalgeber für das Open-Window-Steuersignal (owd),

   - der eingangseitig mit der Signalleitung, an der Auswertesignal anliegt, und der Hauptsteuereinheit(4) verbunden ist und
   - mit dem das Open-Window-Steuersignal (owd) in Abhängigkeit von einem Nullstrom-Signal (nss), das dem an der Signalleitung anliegenden Auswertesignal (us) proportional ist, und einem **durch** die Steuereinheit erzeugten State-Window-Signal (swd) gesetzt wird, wobei die minimale Dauer des Beobachtungszeitraumes **durch** das State-Window-Signal (swd) von der Steuereinheit vorgegeben wird.

6. Schaltungsanordnung nach einem der Ansprüche 1 bis 5, **gekennzeichnet durch** einen Positionsdetektor zum Erzeugen eines Positionssignals (up),

   - der eingangseitig mit der Signal-Phase (P1) oder der Signalleitung (VS) an der das Induktionssignal (U1) bzw. das Auswertesignal (us) anliegt und mit mindestens einer weiteren Signalleitung, an der ein Schwellwertsignal (ut) anliegt, verbunden ist,
   - wobei das Positionssignal (up), das am Signalausgang (PA1) des Positionsdetektors anliegt, abhängig ist vom Vergleich des Induktionssignal (U1) bzw. des Auswertesignal (us) mit dem vorgegebenen Schwellwertsignal (ut).

7. Schaltungsanordnung nach Anspruch 4 und 6, **gekennzeichnet durch** einen Schwellwertgeber,

   - der eingangseitig mit der Hauptsteuereinheit (4) und ausgangseitig mit dem Positionsdetektor verbunden ist,
   - wobei der Schwellwertgeber das Schwellwertsignal (ut) abhängig von Anforderungssignalen (sax) der Steuereinheit und einem Aktivierungssignal (uta) erst zu Beginn des Beobachtungszeitraumes auf seinen Sollwert anhebt.

8. Verfahren zum Ansteuern eines bürstenlosen permanenterregten Gleichstrommotors mit einer Schaltungsanordnung zum Ansteuern gemäß Anspruch 1,

   - wobei die Phasen abhängig von der relativen Drehposition des Rotors, elektrisch in zyklischer Reihenfolge (P1, P2, P3,...Pn oder Pn,...P3, P2, P1), zeitlich versetzt, für jeweils eine Kommutierungszeitdauer, wechselnd mit einem höheren oder einem niedrigeren Spannungspotenzial einer Leistungs-Gleichspannungsquelle (5) elektrisch leitend verbunden oder von beiden Potenzialen elektrisch getrennt werden,
   - wobei die relative Drehposition des umlaufenden Rotors mit Hilfe nur desjenigen Induktionssignals (U1), das an der Signal-Phase (P1) anliegt, bestimmt wird,
   - wobei das elektrisch kapazitive Entstörbauteil(CR) als Teil einer Brückenschaltung wirkt, welche die folgenden weiteren Komponenten aufweist:

     a) die beiden der Signal-Phase (P1) benachbarten Phasen (P2 und Pn),
     b) eine parasitäre Gesamtkapazität (2xCp) der elektronischen Komponenten (CP) der Leistungssteuerung, welche der Signal-Phase zugeordnet sind und
     c) die Signal-Phase (P1), welche die Messbrücke bildet, an der das Induktionssignal gemessen wird,

   - wobei das Entstörungsbauteil (CR) so dimensioniert wird, dass die Brückenschaltung abgeglichen ist, wodurch die, durch elektronische Schalter ($C_p$) der Signal-Phase (P1) hervorgerufene, Störeinflüsse auf das Induktionssignal (U1) durch das Entstörbauteil (CR) ausgeglichen werden.

9. Verfahren nach Anspruch 8, **dadurch gekennzeichnet, dass** die elektrisch leitende Verbindung der Phasen (P1, P2, P3,...Pn) mit dem höheren oder dem niedrigeren Potenzial der Leistungs-Gleichspannungsquelle (5) während der Kommutierungszeitdauer pulsweitenmoduliert in einem variierbaren Pulsweitenverhältnis geschaltet wird.

**10.** Verfahren nach Anspruch 8 oder 9, **dadurch gekennzeichnet, dass** die Induktionssignale (U1, U2 und Un) der Signal-Phase (P1) und der beiden im elektrischen Zyklus benachbarten Phasen (P2 und Pn) schaltungstechnisch oder durch ein Rechenprogramm der Steuereinheit so miteinander verknüpft werden, dass hochfrequente Störeinflüsse, die dem Induktionssignal überlagert sind, herausgefiltert werden und sich ein Auswertesignal (us) entsprechend der Beziehung

$$us = \left(\frac{n-1}{n}\right) \cdot U1 - \frac{1}{n} \cdot \sum_{\omega=1}^{n} U_{\omega}$$

ergibt, das auf das 0V-Potenzial einer Schaltungs-Gleichspannungsquelle (3), die zur elektrischen Versorgung der Schaltungsanordnung dient, bezogen ist, wobei n die Anzahl der Phasen und $U_\omega$ das Induktionssignal an der jeweiligen Phase repräsentiert.

**11.** Verfahren nach einem der Ansprüche 8 bis 10, **dadurch gekennzeichnet, dass** das Induktionssignal (U1) der Signal-Phase (P1) oder das Auswertesignal (us) in Abhängigkeit von einem Open-Window-Steuersignal (owd) mit einem Potenzial der Schaltungs-Gleichspannungsquelle (3) überlagert wird, wodurch ein Beobachtungszeitraum zeitlich definiert wird, in dessen Bereich das Induktionssignal (U1) der Signal-Phase (P1) bzw. das Auswertesignal (us) messbar ist.

**12.** Verfahren nach Anspruch 11, **dadurch gekennzeichnet, dass** das Open-Window-Steuersignal (owd) in Abhängigkeit von einem, dem Induktionssignals (U1) der Signal-Phase (P1) oder dem Auswertesignal (us) proportionalen Nullstromsignal (nss) und einem durch die Steuereinheit erzeugten State-Window-Signal (swd) gesetzt wird, wobei die minimale Zeitdauer, für die das Open-Window-Steuersignal (owd) gesetzt bleibt, durch das State-Window-Signal (swd) von der Steuereinheit vorgegeben wird.

**13.** Verfahren nach einem der Ansprüche 8 bis 12, **dadurch gekennzeichnet, dass** das Positionssignal (up) aus dem Vergleich des Induktionssignals (U1) der Signal-Phase (P1) oder des Auswertesignals (us) mit einem vorgegebenen Schwellwert (ut) innerhalb des Beobachtungszeitraums resultiert, wobei erst bei einem für eine vorbestimmte Zeitdauer andauernden Unterschreiten des Schwellwertes (ut) ein Schaltsignal (uss) erzeugt wird, dessen Wert die Ansprechschwelle eines Schaltelementes (ST) überschreitet, wodurch an dessen Ausgang das Positionssignal (up) erzeugt wird.

**14.** Verfahren nach Anspruch 13, **dadurch gekennzeichnet, dass** der Sollwert des Schwellwertes (ut) abhängig von Steuersignalen (sax) der Steuereinheit in einem Bereich verstellbar ist und das Induktionssignal (U1) oder das Auswertesignal (us) den Schwellwert (ut) innerhalb des Beobachtungszeitraumes im elektrischen Zyklus bei höherem Schwellwert früher und bei niedrigerem Schwellwert später unterschreitet.

**15.** Verfahren nach einem der Ansprüche 13 oder 14, **dadurch gekennzeichnet, dass** der Schwellwert (ut) abhängig von einem Aktivierungssignal (uta) erst zu Beginn des Beobachtungszeitraumes verzögert auf seinen Sollwert angehoben wird, wodurch ein vorzeitiges Unterschreiten des Schwellwertes verhindert wird.

**16.** Verfahren nach Anspruch 15, **dadurch gekennzeichnet, dass** als Aktivierungssignal(uta) das Open-Window-Steuersignal (owd) mitbenutzt wird.

**17.** Verfahren nach einem der Ansprüche 8 bis 16, **dadurch gekennzeichnet, dass** zur Realisierung des Verfahrens nach einem der Ansprüche 8 bis 16 die Steuereinheit derart mitbenutzt wird, dass zumindest eines der Verfahrensmerkmale durch in der Steuereinheit programmierte Rechenalgorithmen verwirklicht wird.

**Claims**

**1.** Circuit arrangement for controlling a brushless, permanently excited direct current motor (BLDC motor, 1), having a rotor, a stator and a plurality of Phases (P1, P2, to Pn) with in each case an external phase connection (V1, V2, to Vn),

- having a power control unit (6), to which the phases, a power DC voltage source (5) and a main control unit (4) are connected,
- such that the main control unit (4), which is also electrically connected to the phase connections, controls the power control unit (6) in accordance with an electrical induction signal (U1) from only one of the phases (P1, P2, to Pn), being the signal phase (P1), induced by the rotation of the rotor, in such a way that the phases dependent on the relative rotational position of the rotor are electrically connected in cyclic sequence (P1, P2, P3, to Pn or Pn, to P3, P2, P1), and offset in time, for one commutation interval in each case, alternating between a higher or lower voltage potential of the motor DC voltage source (5), or are electrically separated from both voltage potentials, and

**characterised in that**

- immediately between the external phase connection (V1) of the signal phase (P1) and the external phase connection (V2 or Vn) of one of the adjacent phases (P2 or Pn) in the electrical cycle, and only between these two phase connections, a capacitive interference suppression component (CR) is arranged and acts as part of a bridge circuit having the following components:

a) both the phases (P2 and Pn) adjacent to the signal phase (P1),
b) a spurious total capacitance ($2xC_P$) of the electronic components ($C_P$) of the power control which are assigned to the signal phase,
c) the signal phase (P1), which forms the measuring bridge, on which the induction signal is measured, and
d) the interference suppression component (CR), which is so dimensioned that the bridge circuit is balanced.

2. Circuit arrangement according to claim 1, **characterised by** a pulse width generator which provides pulse-width modulated control signals that are used to make the electrical connection between the phases and the higher or lower potential of the power DC voltage source during the commutation interval with pulse-width modulation in a variable pulse-width ratio.

3. Circuit arrangement according to claim 1 or 2, **characterised by** a half-wave differential amplifier unit with filter function, connected input-side to the phase connections (V1, V2 and Vn) of the signal phase (P1) and both adjacent phase (P2 and Pn) in the electrical cycle, and having an output-side signal line (DA1), on which an evaluation signal (us) is present, which is proportional to the induction signal (U1) of the signal phase (P1).

4. Circuit arrangement according to one of the claims 1 to 3, **characterised by** a gate generator which is connected to the signal phase (P1) or to a signal line (VS) on which the induction signal (U1) or the evaluation signal (us) is present, and

- which serves to mask the induction signal (U1) or the evaluation signal (us) in accordance with an open-window control signal (owd), defining a period of observation in the electrical cycle in which the evaluation signal (us) can be measured.

5. Circuit arrangement according to claim 4, **characterised by** a signal generator for the open-window control signal (owd),

- which is connected input-side to the signal line on which the evaluation signal is present, and to the main control unit(4), and
- by means of which the open-window control signal (owd), in accordance with a no-load signal (nss) which is proportional to the evaluation signal (us) present on the signal line, and also by means of a state-window signal (swd) generated by the control unit, is set, the minimum duration of the period of observation being predefined by the state-window signal (swd) from the control unit.

6. Circuit arrangement according to one of the claims 1 to 5, **characterised by** a position detector for generating a position signal (up)

- which is connected input-side to the signal phase (P1) or the signal line (VS) on which the induction signal (U1) or the evaluation signal (us) is present, and to at least one further signal line on which a threshold signal (ut) is present,
- the position signal (up) that is present on the signal output (PA1) of the position detector being dependent on the comparison of the induction signal (U1) or the evaluation signal (us) with the predetermined threshold signal (ut).

7. Circuit arrangement according to claims 4 and 6, **characterised by** a threshold generator

   - which is connected input-side to the main control unit (4) and output-side to the position detector,
   - said threshold generator only raising the threshold signal (ut) to a target value at the start of the period of observation, depending on request signals (sax) from the control unit and an activation signal (uta).

8. Method for controlling a brushless, permanently excited direct current motor having a circuit arrangement for controlling according to claim 1,

   - the phases dependent on the relative rotational position of the rotor being electrically connected in cyclic sequence (P1, P2, P3, to Pn or Pn, to P3, P2, P1), and offset in time, for a commutation interval in each case, alternating between a higher or lower voltage potential of a power DC voltage source (5), or being electrically separated from both potentials,
   - the relative rotational position of the rotor being determined only with the aid of the induction signal (U1) which is present on the signal phase (P1),
   - the electrically capacitive interference suppression component (CR) acting as part of a bridge circuit having the following further components:

     a) both the phases (P2 and Pn) adjacent to the signal phase (P1),
     b) a spurious total capacitance ($2xC_P$) of the electronic components ($C_P$) of the power control which are assigned to the signal phase, and
     c) the signal phase (P1), which forms the measuring bridge, on which the induction signal is measured,

   - with the interference suppression component (CR) being so dimensioned that the bridge circuit is balanced, for which reason the interfering influences on the induction signal (U1) caused by the electronic switches (Cp) of the signal phase (P1), are compensated for by the interference suppression component (CR).

9. Method according to claim 8, **characterised in that** the electrical connection between the phases (P1, P2, P3,...Pn) and the higher or lower potential of the power DC voltage source (5) is made during the commutation interval with pulse-width modulation in a variable pulse-width ratio.

10. Method according to claim 8 or 9, **characterised in that** the induction signals (U1, U2 and Un) of the signal phase (P1) and the two adjacent phases (P2 and Pn) in the electrical cycle are linked together by circuitry or by a computer program in the control unit in such a way that high-frequency interfering influences superimposed on the induction signal are filtered out, resulting in an evaluation signal (us) expressed by the relationship

$$us = \left(\frac{n-1}{n}\right) \cdot U1 - \frac{1}{n} \cdot \sum_{\omega=1}^{n} U_\omega$$

said signal being referenced to the 0V potential of a circuit DC voltage source (3), used to supply electrical power to the circuit arrangement, where n represents the number of phases and $U_\omega$ the induction signal on the phase concerned.

11. Method according to one of the claims 8 to 10, **characterised in that** the induction signal (U1) of the signal phase (P1) or the evaluation signal (us), in accordance with an open-window control signal (owd) is overlaid with a potential of the circuit DC voltage source (3), for which reason a period of observation is defined in relation to time, in the region of which the induction signal (U1) of the signal phase (P1) or the evaluation signal (us) can be measured.

12. Method according to claim 11, **characterised in that** the open-window control signal (owd), in accordance with a no-load signal (nss) which is proportional to the induction signal (U1) of the signal phase (P1) or to the evaluation signal (us), and also by means of a state-window signal (swd) generated by the control unit, is set, the minimum duration for which the open-window control signal (owd) remains set being predefined by the state-window signal (swd) from the control unit.

**13.** Method according to one of the claims 8 to 12, **characterised in that** the position signal (up) results from the comparison of the induction signal (U1) of the signal phase (P1) or the evaluation signal (us) with a predefined threshold (ut) within the period of observation, a switching signal (uss) being generated only when the value drops below the threshold (ut) for a predefined interval, the value of said switching signal exceeding the response threshold of a switching element (ST), for which reason the position signal (up) is generated at its output.

**14.** Method according to claim 13, **characterised in that** the desired value of the threshold (ut) is adjustable within a range, dependent on control signals (sax) of the control unit, and the induction signal (U1) or the evaluation signal (us) falls below the threshold (ut) within the period of observation in the electrical cycle sooner in the case of a higher threshold and later in the case of a lower threshold.

**15.** Method according to one of the claims 13 or 14, **characterised in that** the threshold (ut) is raised with delay to its desired value only at the start of the period of observation, depending on an activation signal (uta), thus preventing a premature fall below the threshold.

**16.** Method according to claim 15, **characterised in that** the open-window control signal (owd) is used as an activation signal (uta).

**17.** Method according to one of the claims 8 to 16, **characterised in that** to produce the method according to one of the claims 8 to 16 the control unit is used in such a way that at least one of the features of the method is put into effect by computer algorithms programmed in the control unit.

**Revendications**

**1.** Agencement de circuit pour la commande d'un moteur à courant continu à aimant permanent sans balais (moteur BLDC, 1) comprenant un rotor, un stator et plusieurs phases (P1, P2, ... Pn) avec une connexion de phase externe chacune (V1, V2, ... Vn),

- avec une unité de commande de puissance (6) à laquelle sont raccordées les phases, une source de tension continue de puissance (5) et une unité de commande principale (4).
- l'unité de commande principale (4), laquelle est aussi électriquement raccordée aux connexions de phases, excitant l'unité de commande de puissance (6) en fonction d'un signal d'induction (U1) électrique, induit par la rotation du rotor, d'une seule des phases (P1, P2, ... Pn) de la phase de signal (P1), de manière à décaler temporellement les phases en fonction de la position de rotation relative du rotor, électriquement suivant un ordre cyclique (P1, P2, P3, ... Pn ou Pn, ... P3, P2, P1), pour une durée de commutation respective, et en alternance à les raccorder électriquement à un potentiel de tension élevé ou à un potentiel de tension faible de la source de tension continue de puissance (5), ou à les séparer électriquement des deux potentiels, et

**caractérisé en ce qu'**un composant d'antiparasitage capacitif (CR) est disposé immédiatement entre la connexion de phase extérieure (V1) de la phase de signal (P1) et la connexion de phase extérieure (V2 ou Vn) d'une des phases contiguës dans le cycle électrique (P2 ou Pn), et seulement entre ces deux connexions de phase, ledit composant fonctionnant comme élément d'un montage en pont comprenant les composants suivants :

a) les deux phases (P2 et Pn) contiguës à la phase de signal (P1),
b) une capacité parasitaire totale ($2 \times C_P$) des composants électroniques ($C_P$) de la commande de puissance affectés à la phase de signal,
c) la phase de signal (P1) formant le pont de mesure sur lequel le signal d'induction est mesuré, et
d) le composant d'antiparasitage (CR) dimensionné de manière à égaliser le montage en pont.

**2.** Agencement de circuit selon la revendication 1, **caractérisé par** un générateur d'impulsions en largeur délivrant des signaux de commande à impulsions modulées en largeur, au moyen desquels le raccordement électrique des phases avec le potentiel élevé ou faible de la source de tension continue de puissance est modulé suivant un facteur variable d'impulsions en largeur pendant la durée de commutation.

**3.** Agencement de circuit selon la revendication 1 ou 2, **caractérisé par** une unité d'amplification différentielle demi-onde avec une fonction de filtre, raccordée côté entrée aux connexions de phases (V1, V2 et Vn) de la phase de signal (P1) ainsi qu'aux deux phases (P2 et Pn) contiguës dans le cycle électrique, et avec un conducteur de signaux (DA1) côté sortie, auquel est appliqué un signal d'évaluation (us) proportionnel au signal d'induction (U1) de la phase de signal (P1).

4. Agencement de circuit selon l'une des revendications 1 à 3, **caractérisé par** un générateur de portes, raccordé à la phase de signal (P1) ou à un conducteur de signaux (VS), auquel est appliqué le signal d'induction (U1) ou le signal d'évaluation (us), et

   - servant à supprimer le signal d'induction (U1) ou le signal d'évaluation (us) en fonction d'un signal de commande d'ouverture de fenêtre (« open window », owd) définissant un intervalle temporel d'observation dans le cycle électrique pendant lequel le signal d'évaluation (us) peut être mesuré.

5. Agencement de circuit selon la revendication 4, **caractérisé par** un émetteur de signaux pour le signal de commande d'ouverture de fenêtre (owd),

   - lequel est côté entrée raccordé au conducteur de signaux auquel est appliqué le signal d'évaluation, et à l'unité de commande principale (4), et
   - avec lequel le signal de commande d'ouverture de fenêtre (owd) est fixé en fonction d'un signal de courant nul (nss) proportionnel au signal d'évaluation (us) appliqué au conducteur de signaux, et d'un signal d'état de fenêtre (« state window signal », swd), la durée minimale de l'intervalle temporel d'observation étant prescrite par le signal d'état de fenêtre (swd) de l'unité de commande.

6. Agencement de circuit selon l'une des revendications 1 à 5, **caractérisé par** un détecteur de position pour la génération d'un signal de position (up),

   - lequel est côté entrée raccordé à la phase de signal (P1) ou au conducteur de signaux (VS) auquel est appliqué le signal d'induction (U1) ou le signal d'évaluation (us), et à au moins un autre conducteur de signaux, auquel est appliqué un signal de valeur seuil (ut),
   - le signal de position (up) appliqué à la sortie de signaux (PA1) du détecteur de position étant fonction de la comparaison du signal d'induction (U1) ou du signal d'évaluation (us) avec le signal de valeur seuil (ut) prescrit.

7. Agencement de circuit selon les revendications 4 et 6, **caractérisé par** un émetteur de valeur seuil,

   - lequel est raccordé à l'unité de commande principale (4) côté entrée et au détecteur de position côté sortie,
   - l'émetteur de valeur seuil n'élevant le signal de valeur seuil (ut) à une valeur de consigne qu'au début de l'intervalle temporel d'observation, en fonction de signaux de demande (sax) de l'unité de commande et d'un signal d'activation (uta).

8. Procédé pour la commande d'un moteur à courant continu à aimant permanent sans balais par un agencement de circuit pour la commande de ce dernier selon la revendication 1,

   - les phases étant temporellement décalées en fonction de la position de rotation relative du rotor, électriquement suivant un ordre cyclique (P1, P2, P3, ... Pn ou Pn, ... P3, P2, P1), pour une durée de commutation respective, et en alternance électriquement raccordées à un potentiel de tension élevé ou à un potentiel de tension faible d'une source de tension continue de puissance (5), ou électriquement séparées des deux potentiels,
   - la position de rotation relative du rotor en mouvement n'étant déterminée qu'au moyen du signal d'induction (U1) appliqué à la phase de signal (P1),
   le composant d'antiparasitage capacitif (CR) fonctionnant comme élément d'un montage en pont comprenant les composants suivants :

      a) les deux phases (P2 et Pn) contiguës à la phase de signal (P1),
      b) une capacité parasitaire totale ($2 \times C_P$) des composants électroniques ($C_P$) de la commande de puissance affectés à la phase de signal,
      c) la phase de signal (P1) formant le pont de mesure sur lequel le signal d'induction est mesuré,

   - le composant d'antiparasitage (CR) étant dimensionné de manière à égaliser le montage en pont, pour compenser par le composant d'antiparasitage (CR) les influences parasites sur le signal d'induction (U1) générées par des commutateurs électroniques ($C_P$) de la phase de signal (P1).

**9.** Procédé selon la revendication 8, **caractérisé en ce que** le raccordement électrique des phases (P1, P2, P3, ... Pn) avec le potentiel élevé ou faible de la source de tension continue de puissance (5) est modulé suivant un facteur variable d'impulsions en largeur pendant la durée de commutation.

**10.** Procédé selon la revendication 8 ou 9, **caractérisé en ce que** les signaux d'induction (U1, U2 et Un) de la phase de signal (P1) et des deux phases contiguës dans le cycle électrique (P2 et Pn) sont liés entre eux par technique de circuit ou par programme de calcul de l'unité de commande, de manière à filtrer les influences parasites à haute fréquence superposées au signal d'induction, un signal d'évaluation (us) en résultant conformément à la relation

$$us = \left( \frac{n-1}{n} \right) \cdot U1 - \frac{1}{n} \cdot \sum_{\omega=1}^{n} U_{\omega}$$

se rapportant au potentiel 0V d'une source de tension continue de circuit (3) servant à l'alimentation électrique de l'agencement de circuit, n représentant le nombre de phases et $U_{\omega}$ le signal d'induction sur la phase correspondante.

**11.** Procédé selon l'une des revendications 8 à 10, **caractérisé en ce que** le signal d'induction (U1) de la phase de signal (P1) ou le signal d'évaluation (us) sont recouverts par un potentiel de la source de tension continue de circuit (3) en fonction d'un signal de commande d'ouverture de fenêtre (owd), un intervalle d'observation étant ainsi temporellement défini, dans l'étendue duquel le signal d'induction (U1) de la phase de signal (P1) ou le signal d'évaluation (us) sont mesurables.

**12.** Procédé selon la revendication 11, **caractérisé en ce que** le signal de commande d'ouverture de fenêtre (owd) est fixé en fonction d'un signal de courant nul (nss) proportionnel au signal d'induction (U1) de la phase de signal (P1) ou au signal d'évaluation (us), et d'un signal d'état de fenêtre (swd) généré par l'unité de commande, la durée minimale pendant laquelle le signal de commande d'ouverture de fenêtre (owd) reste fixé étant prescrite par le signal d'état de fenêtre (swd) de l'unité de commande.

**13.** Procédé selon l'une des revendications 8 à 12, **caractérisé en ce que** le signal de position (up) résulte de la comparaison du signal d'induction (U1) de la phase de signal (P1) ou du signal d'évaluation (us) avec une valeur seuil prescrite (ut) pendant l'intervalle temporel d'observation, un signal de commutation (uss) n'étant généré qu'en cas de sous-dépassement continu de la valeur seuil (ut) pendant une durée prédéfinie, dont la valeur dépasse le seuil de réaction d'un élément de commutation (ST), le signal de position (up) étant ainsi généré à la sortie de ce dernier.

**14.** Procédé selon la revendication 13, **caractérisé en ce que** la valeur de consigne de la valeur seuil (ut) est réglable dans une plage en fonction des signaux de commande (sax) de l'unité de commande, et **en ce que** le signal d'induction (U1) ou le signal d'évaluation (us) passe plus tôt sous la valeur seuil (ut) en cas de valeur seuil élevée pendant l'intervalle temporel d'observation du cycle électrique, et plus tard en cas de valeur seuil basse.

**15.** Procédé selon l'une des revendications 13 à 14, **caractérisé en ce que** la valeur seuil (ut) n'est élevée à sa valeur de consigne qu'au début de l'intervalle temporel d'observation, en fonction d'un signal d'activation (uta), un sous-dépassement précoce de la valeur seuil étant ainsi empêché.

**16.** Procédé selon la revendication 15, **caractérisé en ce que** le signal de commande d'ouverture de fenêtre (owd) est utilisé conjointement en tant que signal d'activation (uta).

**17.** Procédé selon l'une des revendications 8 à 16, **caractérisé en ce que**, pour la réalisation du procédé selon l'une des revendications 8 à 16, l'unité de commande est utilisée conjointement pour qu'au moins une des caractéristiques de procédé soit réalisée par des algorithmes de calcul programmés dans l'unité de commande.

FIG 1

EP 1 611 670 B1

# FIG 2

Elektrischer Zyklus einer Phase (V1)

FIG 3

BLDC-Motor

R2
P2
L2

6B

SP

L1    R1
P1

V2

V1

K1
High

K1
Low

Vbat

0 V

CP

CP

0 V

Rk
CR

Ck

V2

V1

2

Ln
Pn
Rn

Vn

Vn

Vn

0V
Referenzpotential

1

6A

EP 1 611 670 B1

## FIG 4

Halbwellen - Differentialverstärker - Einheit mit Filterfunktion

## FIG 5

# FIG 6

# FIG 7A

0 V Referenzpotential

EP 1 611 670 B1

# FIG 7B

MS-real

Signalwert (U)
Zeit (t)

MS-ideal

Dg.1

ut

t

SWS-
Schaltschwelle

Dg.2

uss

t

up

high

Dg.3

ts

t

TB

ta

te

23

**FIG 8**

Schwellwertgweber

# FIG 9

# FIG 10

BLDC Motor

0V Referenzpotential

1_High

Cp

1_Low

Cp

P2
P1
Pn

CR

Vn
V1
V2

1_high
2_high
n_high

1_low
2_low
n_low

EP 1 611 670 B1